(19) Europäisches Patentamt
European Patent Office
Office européen des brevets

(11) EP 4 534 587 A1

(12) **EUROPEAN PATENT APPLICATION**

(43) Date of publication:
**09.04.2025 Bulletin 2025/15**

(21) Application number: **24204347.9**

(22) Date of filing: **02.10.2024**

(51) International Patent Classification (IPC):
***C08J 5/00*** *(2006.01)* ***B29C 43/00*** *(2006.01)*
***B82Y 30/00*** *(2011.01)* ***C08J 5/18*** *(2006.01)*
***C08K 5/00*** *(2006.01)* ***C08L 67/04*** *(2006.01)*
***C08L 91/00*** *(2006.01)* ***D04H 1/4382*** *(2012.01)*
***D04H 1/728*** *(2012.01)*

(52) Cooperative Patent Classification (CPC):
(C-Sets available)
**C08J 5/18; B29C 43/003; C08J 5/005; C08K 5/0016; C08L 91/00; D04H 1/43838; D04H 1/728;** B82Y 30/00; B82Y 40/00; C08J 2367/04; C08J 2425/06; C08J 2467/02
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.10.2023 ZA 202309231**

(71) Applicants:
- **University of Johannesburg**
  **Johannesburg 2006 (ZA)**
- **Tshwane University Of Technology**
  **Pretoria, Gauteng 0183 (ZA)**

(72) Inventors:
- **OKPUWHARA, Rita Onoharigho**
  **2094 JOHANNESBURG (ZA)**
- **OBOIRIEN, Bilainu**
  **0186 PRETORIA (ZA)**
- **SADIKU, Emmanuel Rotimi**
  **0184 PRETORIA (ZA)**

(74) Representative: **Stöckeler, Ferdinand**
**Schoppe, Zimmermann, Stöckeler Zinkler, Schenk & Partner mbB**
**Patentanwälte**
**Radlkoferstrasse 2**
**81373 München (DE)**

# (54) NANOCOMPOSITES OF BRITTLE POLYMERIC MATERIALS

(57) A process for producing a nanocomposite of a brittle polymeric material includes forming sheets or films from the brittle polymeric material compounded with a plasticizer. A mat of nanofibres of at least one thermoplastic is sandwiched between two of the sheets or films to form a green nanocomposite structure. The green nanocomposite structure is subjected to an elevated pressure and an elevated temperature to produce a sheet or film nanocomposite of the brittle polymeric material. The sheet or film nanocomposite shows improved impact resistance compared to a neat, uncompounded sheet or film of the same brittle polymeric material.

EP 4 534 587 A1

(52) Cooperative Patent Classification (CPC): (Cont.)

C-Sets
**C08K 5/0016, C08L 67/04**

## Description

THIS INVENTION relates to nanocomposites of brittle polymeric materials. In particular, the invention relates to a process for preparing a nanocomposite of a brittle polymeric material, to a nanocomposite of a brittle polymeric material produced by such process, to a nanocomposite of a brittle polymeric material, and to use of a nanocomposite of a brittle polymeric material in the construction of a watercraft.

This specification is that of an application claiming priority from South African provisional patent application no. 2023/09231 dated 3 October 2023, the contents of which are incorporated herein by way of reference.

In this specification, a brittle polymeric material is a polymeric material with a tensile elongation at break of less than 3 % at room temperature.

Over the last two decades, several studies have focussed on the production of polylactide (PLA) matrix-based composites. This is because PLA is biodegradable, biobased, and the composites produced from it could be entirely or partially biodegradable, hence encouraging environmental safety and recyclability. Nevertheless, several factors affect and determine the properties of these bio-composites. PLA as matrix material is brittle, has low toughness, low ductility, and a very slow crystallization rate, which influence the mechanical and thermal properties of the bio-composite materials produced. Therefore, biobased materials such as PLA must undergo modification for it to be successfully used for composites. Such approaches include copolymerization, melt blending, and plasticization with different polymers and rubbers. In the preparation and investigation of the properties of nanocomposites, conducted by Chieng *et al.,* [B. Chieng, N. Ibrahim, W. Yunus, and M. Hussein, "Poly(lactic acid)/Poly(ethylene glycol) Polymer Nanocomposites: Effects of Graphene Nanoplatelets," Polymers (Basel)., vol. 6, no. 1, pp. 93-104, Dec. 2013, doi: 10.3390/polym6010093], PLA was first melt-blended with polyethylene glycol (PEG) as a plasticizer. Thereafter, the plasticized PLA was reinforced with nano-filler, graphene nanoplatelets. Observation from the results showed an increase in the tensile properties of the composites when compared to the unreinforced PLA/PEG blend. The increase in the tensile properties was attributed to the uniform dispersion, alignment and strong interfacial interaction between the graphene and the polymer blend. Graphene is however very expensive.

The type of reinforcement material used in the composite plays a key role in the final properties of the composite obtained. From the current available research, natural fibres are the foremost reinforcement materials for PLA and shows great potential, especially with the positive effect of producing complete biodegradable composites. However, there are drawbacks in reinforcing PLA with natural fibres, such as incompatibility between hydrophilic natural fibres and a hydrophobic PLA polymer matrix. Other drawbacks are low thermal stability, moisture uptake and quality variations. Although in some literature works, physical and chemical modification methods have been used to increase compatibility, there is the risk of chain degradation of the fibres and an increase in production costs.

Many studies have also been carried out on the potential of synthetic conventional fibres, such as carbon, basalt and glass, as reinforcements for PLA for composites production. The use of synthetic fibres, e.g., glass as reinforcement for PLA, although producing partially biodegradable composites, are often associated with environmental problems. Natural fibre composites, although having high stiffness, do not possess the equivalent strength as glass fibre composites. Investigations on the possibility of synthetic thermoplastic polymers as reinforcing fibres for PLA are rare but promising. The properties of thermoplastic fibres can easily be tailored to meet certain specifications. Bodros *et al.,* [E. Bodros, I. Pillin, N. Montrelay, and C. Baley, "Could biopolymers reinforced by randomly scattered flax fibre be used in structural applications?" Compos. Sci. Technol., vol. 67, no. 3-4, pp. 462-470, Mar. 2007, doi: 10.1016/j.compscitech.2006.08.024] employed a film stacking and compression moulding method to manufacture flax reinforced PLA bio-composite. The tensile properties of the bio-composite were compared against glass fibre reinforced (GFR) polyester resins to determine whether the bio-composite can replace the GFR composite. The specific tensile modulus and specific tensile strength values were similar.

Adjusting the fibre dimension is an alternative approach. Another type of fibre that can be considered for use as reinforcement material, with the objective of improving mechanical performance, is thus a nanofibre, such as an electrospun nanofibre. The production of electrospun fibres on nanometric-to-micrometric scale or diameter (i.e., having dimensions smaller than about 500 nanometres) is feasible and they stand in contrast to the conventional fibres that are produced in micrometric-to-millimetre sizes (i.e., having dimensions larger than about 500 nanometres). Electrospun fibres have high specific surface areas for fibre-matrix interfacial interactions and limited defects due to their small sizes, leading to better mechanical performance. However, optimisation of fibre loading is important because high fibre loading of nanofibres causes agglomeration. This triggers defect sites, which lead to deterioration in the general mechanical properties, and alters the density and water absorption behaviour of the resultant nanocomposite. For instance, electrospun nylon-6 reinforced PLA nanocomposite was produced by Neppalli *et al.,* [R. Neppalli et al., "Electrospun nylon fibres for the improvement of mechanical properties and for the control of degradation behaviour of poly(lactide)-based composites," J. Mater. Res., vol. 27, no. 10, pp. 1399-1409, May 2012, doi: 10.1557/jmr.2012.70] at 1.5 wt.% and 2.5 wt.% fibre loadings. The tensile modulus of the nanocomposite produced showed a threefold increase when compared to the unreinforced PLA matrix.

The properties and production cost of a composite material depend on the manufacturing processes involved. Rubio-López *et al.,* [A. Rubio-López, A. Olmedo, A. Díaz-Álvarez, and C. Santiuste, "Manufacture of compression moulded PLA based biocomposites: A parametric study," Compos. Struct., vol. 131, pp. 995-1000, Nov. 2015, doi: 10.1016/j.compstruct.2015.06.066] investigated how compression moulding processing parameters affect the production of PLA bio-composites by using the film stacking technique. They studied the influence of the number of plies (layers), fibres (flax, cotton, and jute), matrix, heating temperature and pressure. Optimised conditions are heating temperatures of 185 ºC to produce high strength bio-composites to prevent damage to fibres due to overheating. Preheating times of 2 min and 3 min of heating under pressure was used. This led to the production of bio-composites with a tensile strength of over 100 MPa and a decrease in production cost and time.

A process for producing a nanocomposite of a brittle polymeric material which shows at least improved impact resistance compared to a neat, uncompounded sheet or film of the same brittle polymeric material, and such a nanocomposite suitable for use in construction of a watercraft, will be desirable.

According to one aspect of the invention, there is provided a process for producing a nanocomposite of a brittle polymeric material, the process including

forming sheets or films from the brittle polymeric material compounded with a plasticizer;
sandwiching a mat of nanofibres of at least one thermoplastic between two of the sheets or films to form a green nanocomposite structure, and
subjecting the green nanocomposite structure to an elevated pressure and an elevated temperature to produce a sheet or film nanocomposite of the brittle polymeric material.

The sheet or film nanocomposite of the brittle polymeric material in particular shows improved impact resistance compared to a neat, uncompounded sheet or film of the same brittle polymeric material.

In the sheet or film nanocomposite of the brittle polymeric material, the brittle polymeric material thus forms a matrix material, which is reinforced with the mat of nanofibres.

The nanocomposite of the brittle polymeric material, i.e. the sheet or film nanocomposite of a brittle polymeric material, therefore comprises the brittle polymeric material and the nanofibres.

The brittle polymeric material may be a biodegradable polymer.

The brittle polymeric material may be a biobased material.

The brittle polymeric material may be selected from the group consisting of polylactide (PLA), biodegradable polymers from renewable sources including polyhydroxy butyrate (PHB), poly(3-hydroxybutyrate-co-3-hydroxyhexanoate) abbreviated as (PHBH), particularly PHBH made up of low content 3-hydroxyhexanoate (3HHx) monomers, i.e., depending on the composition of the copolymer, poly(3-hydroxybutyrate-co-3-hydroxyvalerate) (PHBV) with brittle composition, petroleum source-derived biodegradable polymers including poly(butylene succinate-co-adipate) (PBSA) with brittle composition, and mixtures of two or more of these.

In one embodiment of the invention, the brittle polymeric material is polylactide (PLA).

The plasticizer may be a biobased material.

The plasticizer may be selected from the group consisting of a lanolin composition, epoxidized palm oil, epoxidized canola oil, epoxidized soybean oil, and mixtures of two or more of these.

The lanolin composition may be an epoxidized lanolin composition.

A commercially available form of a suitable epoxidized lanolin composition is Fluid Film® Liquid-A (FFL). This is an oil that is made from lanolin. It is produced by Eureka Chemical Company, United States of America (USA), incorporated in 1953. It is entirely natural, safe, nontoxic, non-hazardous, environmentally friendly, cheap, and long-lasting. It is both USA and Canada Food and Drug Administration (FDA) approved. It has a flashpoint of 207°C, which is fourfold greater than the flashpoint of most petroleum-solvent-based products. It acts as an anti-corrosion, rust penetrant, and a lubricant. It does not evaporate and has been proven by the salt spray resistance (ASTM B-117) test to be highly anti-corrosive compared to other tested products. FFL oil can be used on all surfaces because it is water-resistant, which includes all metals, all marine applications, boats, plastics, leather, wood, and winches. Thus, a lanolin composition such as Fluid Film® Liquid-A provides corrosion prevention, which is an important aspect in the context of this invention, considering application of the nanocomposite of the invention in the construction of watercraft.

Although not wishing to be bound by theory, the inventors believe that the likely interaction between PLA and the epoxidized lanolin of the lanolin composition, based on FTIR analysis, is as shown below:

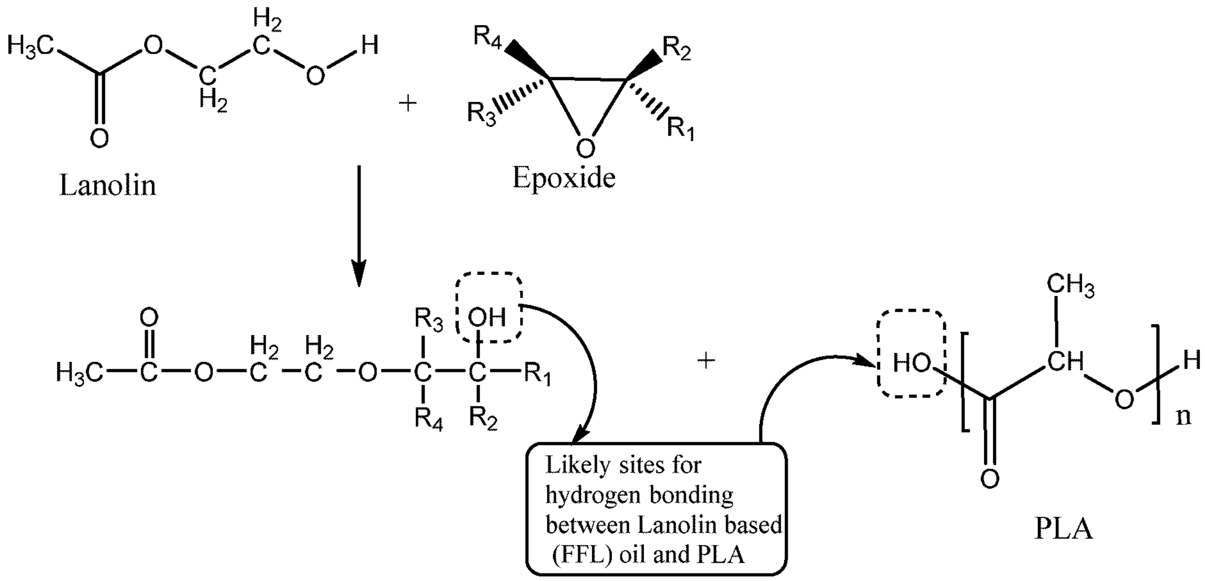


The brittle polymeric material may be compounded with the plasticizer in a mass ratio of between about 95:5 and about 97: 3, e.g., about 96.5:3.5. This mass ratio is particularly suitable for a lanolin composition, such as Fluid Film® Liquid-A, as plasticizer.

The nanofibres may be electrospun thermoplastic nanofibres.

The nanofibres may be electrospun thermoplastic nanofibres obtained from one or more recycled thermoplastics.

The thermoplastic may be selected from the group consisting of expanded polystyrene (EPS), polyethene terephthalate (PET), polyvinylidene fluoride (PVDF), polylactide (PLA), and two or more of these.

In one embodiment of the invention, the thermoplastic is EPS.

In another embodiment of the invention, the thermoplastic is PET.

In a further, preferred embodiment of the invention, the thermoplastic is a combination of EPS and PET.

The nanofibres may have an average fibre diameter of between about 100 nm and about 180 nm, e.g., about 139 nm for PET nanofibres.

It will be appreciated that the nanofibres may include or consist of PET.

The nanofibres may have an average fibre diameter of between about 370 nm and about 450 nm, e.g., about 413 nm for EPS nanofibres.

It will be appreciated that the nanofibres may include or consist of EPS.

The mat may be a non-woven mat.

The mat may consist of a single ply or layer of nanofibres of a single thermoplastic.

Instead, the mat may consist of more than one ply or layer, each ply or layer consisting of one or more thermoplastics.

In a preferred embodiment of the invention, the mat consists of more than one ply or layer, each ply or layer consisting of a single thermoplastic, and at least two of the plies or layers consisting of a different thermoplastic than the other of said at least two plies or layers.

In one embodiment of the invention, the mat comprises two plies or layers of EPS sandwiching a single ply or layer of PET.

In another embodiment of the invention, the mat comprises two plies or layers of PET sandwiching a single ply or layer of EPS.

The mat, prior to subjecting the green nanocomposite structure to an elevated pressure and an elevated temperature, may have a thickness of between about 0.1 mm and about 0.14 mm, e.g., about 0.12 mm for PET nanofibres.

The mat, prior to subjecting the green nanocomposite structure to an elevated pressure and an elevated temperature, may have a thickness of between about 0.15 mm and about 0.3 mm, e.g., about 0.25 mm for EPS nanofibres.

The mass ratio of two sheets or films of the brittle polymeric material and the layers of a mat of the nanofibres may be between about 98.2:1.8 and about 99.0:1.0, e.g., about 98.6:1.4 for unmixed PET nanofibres.

The mass ratio of two sheets or films of the brittle polymeric material and the layers of a mat of the nanofibres may be between about 96.5:3.5 and about 97.7:2.3, e.g., about 97.1:2.9 for unmixed EPS nanofibres.

Thus, for example, when the brittle polymeric material is PLA and the mat consists of one or more plies or layers of PET nanofibres, the mass ratio may be about 98.6:1.4, and when the brittle polymeric material is PLA and the mat consists

of one or more plies or layers of EPS, the mass ratio may be about 97.1:2.9.

The elevated pressure may be at least about 900 kPa, preferably at least about 950 kPa, more preferably at least about 975 kPa, e.g., about 1000 kPa. Typically, the elevated pressure does not exceed about 1500kPa.

The elevated temperature may be at least about 180°C, preferably at least about 185°C, more preferably at least about 190°C, e.g., about 190°C.

Typically, the elevated temperature does not exceed about 200°C.

In one embodiment of the invention, the elevated temperature is higher than the melting temperature of the thermoplastic of one of the plies or layers of the mat, but below the melting temperature of the thermoplastic of another of the plies or layers of the mat.

The sheet or film nanocomposite may have a thickness of between about 1 mm and about 3mm, or between about 1.5mm and about 2.5mm, or between about 1.75mm and about 2.25mm, e.g., about 2.0mm.

The process may include annealing the sheet or film nanocomposite.

Annealing may be conducted at a temperature of at least about 70°C, preferably at least about 75°C, more preferably at least about 80°C, e.g., about 80°C. Typically, annealing is conducted at a temperature which does not exceed about 100°C.

Annealing may be conducted for at least about 2 hours, preferably at least about 2.5 hours, more preferably at least about 3 hours, e.g., about 3 hours. Typically, annealing is conducted for less than about 6 hours, or less than about 5 hours, or less than about 4 hours.

Annealing may be conducted under a vacuum.

The process may include subjecting the nanofibres to alkaline treatment, prior to sandwiching the nanofibres between sheets or films of the brittle polymeric material. In one embodiment of the invention, the alkaline treatment includes soaking a mat of nanofibres in an aqueous NaOH solution, washing the mat with the deionized water, and drying the mat.

The invention extends to a nanocomposite of a brittle polymeric material produced by the process as hereinbefore described.

According to another aspect of the invention, there is provided a nanocomposite of a brittle polymeric material comprising sheets or films of the brittle polymeric material, compounded with a plasticizer, sandwiching a mat of nanofibres of at least one thermoplastic.

The brittle polymeric material, the sheets or films, the plasticizer, the mat and the thermoplastic may be as hereinbefore described.

According to a further aspect of the invention, there is provided use of a sheet or film nanocomposite of a brittle polymeric material as hereinbefore described in the construction of a watercraft.

In one embodiment of the invention, the sheet or film nanocomposite of a brittle polymeric material is used in the construction of a hull of a watercraft, such as a boat or a ship.

The use may be comprised by a method of constructing the hull of a watercraft, e.g. by layering the nanocomposite on a mold or framework.

The invention also provides a watercraft hull comprising or consisting of the nanocomposite of the invention.

The invention is now described with reference to the following experimental study and the following drawings. In the discussion of the experimental study, and in the drawings, acronyms are used as set out in Table 1 below, to refer to the compositions as defined in Table 1.

**Table 1.** Acronyms and compositions of the neat PLA matrix, modified PLA matrix, and the fabricated nanocomposites.

| Acronym | Composition |
|---|---|
| UNPLA or Neat PLA | 100wt. % PLA (unreinforced neat PLA matrix) |
| UMPLA or Mod PLA | 3.5wt. % fluid film oil (FFL oil plasticizer or fluid film lanolin-based oil) + 96.5wt. % PLA (unreinforced modified PLA matrix) |
| Neat PLA-PET | Neat PLA reinforced with unmixed recycled PET (rPET) electrospun fibres (Efibres) (a mat of 3 layers or plies) |
| Mod PLA-PET | Modified PLA reinforced with unmixed rPET Efibres (a mat of 3 layers or plies) |
| Neat PLA-EPS | Neat PLA reinforced with unmixed (recycled EPS (rEPS) Efibres (a mat of 3 layers or plies) |
| Mod PLA-EPS | Modified PLA reinforced with unmixed rEPS Efibres (a mat of 3 layers or plies) |
| Neat PLA-HyPEP | Neat PLA reinforced with hybrid rPET-rEPS-rPET Efibres configuration (a mat of 3 layers or plies) |

(continued)

| Acronym | Composition |
|---|---|
| Mod PLA-HyPEP | Modified PLA reinforced with hybrid rPET-rEPS-rPET Efibres configuration (a mat of 3 layers or plies) |
| Neat PLA-HyEPE | Neat PLA reinforced with hybrid rEPS-rPET-rEPS Efibres configuration (a mat of 3 layers or plies) |
| Mod PLA-HyEPE | Modified PLA reinforced with hybrid rEPS-rPET-rEPS Efibres configuration (a mat of 3 layers or plies) |

In the drawings,

Figure 1 shows a compression moulding process in accordance with the invention for producing a nanocomposite of a brittle polymeric material;
Figure 2 shows SEM micrographs of (a) PET Efibres and (b) EPS Efibres, and bar graphs of nanofibre diameter distribution for (a') PET Efibres and (b') PET Efibres;
Figure 3 shows FTIR spectra of UNPLA, UMPLA and the PLA-Efibres nanocomposites.
Figure 4 shows X-ray powder diffractograms of the UNPLA, UMPLA and the PLA-Efibre nanocomposites.
Figure 5 shows SEM micrographs of the fracture surfaces for the PLA-Efibre nanocomposites: (a) Neat PLA-PET, (b) Mod PLA-PET, (c) Neat PLA-EPS, (d) Mod PLA-EPS, (e) Neat PLA- HyPEP, (f) Mod PLA-HyPEP, (g) Neat PLA-HyEPE and (h) Mod PLA-HyEPE;
Figure 6 shows DSC thermograms of the UNPLA, UMPLA and the PLA-Efibre nanocomposites: (a) Heating and (b) Cooling.
Figure 7 shows: (a) TGA thermogram of the UNPLA, UMPLA and the PLA-Efibre nanocomposites, and (b) DTG thermogram of the UNPLA, UMPLA and the PLA-Efibre nanocomposites.
Figure 8 shows graphs of the DMA properties of the nanocomposite materials: (a) Temperature-dependent Storage Modulus, (a'-insert) cold crystallization action of polymers, (b) Tan Delta Curves showing Tg Peaks and (c) Loss Modulus;
Figure 9 shows bar graphs of the tensile properties of the UNPLA, UMPLA and the PLA-Efibre nanocomposite materials: (a) Tensile Modulus, (b) Tensile Elongation-at-break, (c) Tensile Strength-at-break and (d) Tensile Load-at-yield;
Figure 10 shows bar graphs of the tensile properties of the UNPLA, UMPLA and the PLA-Efibre nanocomposite materials: (a) Flexural modulus, (b) Flexural elongation-at-break, (c) Flexural strength-at-break and (d) Flexural load-at-yield; and
Figure 11 shows bar graphs of impact resistance of the UNPLA, UMPLA and the nanocomposite materials.

## Experimental study

## Materials and Methods

### Materials

NatureWorks, LLC (USA) supplied 2,.16 kg of PLA 4032D extrusion grade, with a melt flow index (MFI) of 6g/10 min at 190°C and a density of 1.23 g/cm$^3$. Lanolin-based oil (Fluid Film oil or FFL oil plasticizer) was purchased from MixMed (Bloubergsand, South Africa) and used as the bio-plasticizer additive. Analytical grade with 99% purity hexafluoroisopropanol (HFIP), (R)-(+)-Limonene (97 %, Pvap = 400 Pa at 14.4°C) were purchased from Merck, South Africa, and sodium hydroxide (anhydrous) reagent grade, ≥98%, pellets were purchased from Sigma-Aldrich. All the reagents were used as received without further purification. EPS and PET wastes were obtained from post-consumer waste bins. The EPS and PET waste plastics material was mechanically recycled and processed into finished goods (electrospun nanofibres or Efibres) by a solution electrospinning process. The recycled polymeric Efibres preforms produced were used in unmixed and hybrid forms as reinforcement materials.

### Electrospinning Method

The electrospinning process was performed by using an electrospinning apparatus (EC-DIG, IME Technologies, Geldrop, The Netherlands). Two sets of recycled polymer Efibres were prepared by a direct electrospinning method by using optimised conditions. The rPET was dissolved in HFIP solvent (10 wt. %) and the rEPS was dissolved in d-limonene

solvent (20 wt. %). The solution was transferred to syringes fitted with 21-gauge stainless steel needles. Optimised flow rates, electric voltage, speed of the cylindrical drum and the distance between the needle tip and the collecting device were set at 0.1 mL/h, 15 kV, 100 rpm and 15 cm, respectively. To achieve optimum fibre loading and uniformity, a set of fibre was spun for a duration of 15 hrs. The Efibres were collected and vacuum dried at room temperature for 48 h to remove residual solvent before treatment and characterisation.

**Surface treatment of the Efibres**

To improve the adhesion between the Efibres and PLA matrices, the Efibres were subjected to chemical modification by alkaline treatment. An aqueous solution of 1M NaOH was prepared and Efibres mats were soaked in it for 5 min at a temperature of 40°C, while maintaining a bath ratio of 1g:40mL. After the treatment, the Efibre mats were rinsed several times with deionized water to remove excess sodium hydroxide until a neutral pH was attained. The mats were thus repeatedly washed until the water used for washing the Efibres no longer gave any alkaline reaction after testing with litmus paper. The surface-treated Efibres were then dried in a vacuum oven at 60°C for 3 h.

**Nanocomposite Fabrication Process**

Prior to processing, all the materials were dried. Grounded PLA pellets were pre-dried in a vacuum oven for 24 h at 60°C. The rPET Efibres and rEPS Efibres were also dried in a vacuum for 40 min at 80°C and 60°C, respectively. To produce the plasticizer modified (mod) matrices, the grounded PLA pellets and the lanolin-based oil plasticizer (96.5:3.5 wt. %) were mixed. Neat and modified PLA matrix materials was processed and blend-compounded in a twin-screw extruder (Thermo Scientific, Waltham, MA, USA). The extruder temperature profile, along the different zones of the barrel (from hopper to die) was 120°C-140°C-190°C-190°C-190°C-190°C-190°C-190°C-190°C. The rotational speed of the extruder screws was 202 rpm.

Thereafter, a film stacking technique and compression moulding method were used to produce the PLA matrix materials in film or sheet form by using a Carver, Inc. laboratory benchtop press (Model 973214A; Wabash, USA).

25 g gram of PLA pellets were heated to 200°C before pressing for 5 min at 1 MPa to produce sheets (films) of 123 x130 x 1mm, which were cooled to room temperature under pressure. A pair of sheet plies were then stacked with the electrospun mats (constant optimal loading level of ~1.4 wt. % and ~2.9 wt. % for the unmixed rPET and unmixed rEPS Efibres, respectively) and the resultant green nanocomposite structure (sandwich structure) was placed into a second mould cavity with dimensions 123 x130 x 2mm. The scheme of the nanocomposite processing is shown in Figure 1. The stack was then compressed at 190°C, with a 2 min preheating time and 3 min under pressure at 1 MPa, and then cooled under pressure to room temperature. The resultant nanocomposite materials had an average dimension of approximately 123 x 130 x 2mm. The PLA-Efibres nanocomposite samples were cut by laser as per required standardized specimens, based on an ASTM specification. Prior to the various types of testing conducted, the samples were annealed at 80°C for 3 h under a vacuum oven.

**Characterization of the Efibres**

**Dimensions**

Density measurement of the sample materials was carried out with a pycnometer by using the ISO 118-3 standard and ethanol as the reference liquid at 23°C. The average thickness of the electrospun fibrous mats was measured by using a micrometre screw gauge.

**Morphology of the Efibres**

The surface morphologies of Efibres samples were observed by using a scanning electron microscope (SEM, JMS- 7500 F, JEOL, Japan), operated at an accelerating voltage of 3 kV. The average fibre diameter (AFD) of the Efibres was measured from the SEM micrographs. The size distribution and image analysis of the SEM micrographs were determined by using a Java image-processing program (ImageJ/FIJI 1.46; The National Institutes of Health, USA). The image type used was 8-bits and a minimum of 100 images were measured and processed.

**Characterization of the Nanocomposite Materials**

**Infrared spectroscopy**

The chemical structure of the nanocomposite samples was analysed with Fourier transform infrared (FTIR)

spectroscopy. This was performed by using an FTIR spectrometer (PerkinElmer; Spectrum 100), equipped with a single bound diamond attenuated total reflectance (ATR) cell. Background and sample spectra were acquired at 4cm$^{-1}$ resolutions, with 32 scans in the wavenumber range between 600cm$^{-1}$ to 4000cm$^{-1}$.

## X-ray powder diffraction

The X-ray powder diffraction (XRPD) of the nanocomposite samples was carried out by using an X'pert PRO diffractometer (PANalytical; EA Almelo, The Netherlands). The anode material was CuK$\alpha$1 and CuK$\alpha$2 radiations (wavelengths 1.540598 Å and 1.544426 Å respectively). The current and operating voltage was 40 mA and 45 kV respectively. The diffractogram was scanned in the 2$\theta$ range of between 4.99° to 90.01°, at a rate of 2.12/min.

## Morphology of the nanocomposites

The surface morphologies of the nanocomposite samples were observed by using a scanning electron microscope (SEM, JMS-7500 F, JEOL, Japan), operated at an accelerating voltage of 3 kV. Before imaging was carried out, the samples were cryogenically fractured by immersion in liquid nitrogen for 15 min. The fractured surfaces were sputter-coated with carbon before imaging in order to reduce electrostatic surface charging and electron irradiation, hence improving the electrical conductivity during imaging.

## Differential scanning calorimetry

Differential scanning calorimetry (DSC) analysis was carried out on a DSC Q2000 (TA instruments LL, Delaware, USA) for the nanocomposite samples, weighing between 5mg and 6mg. The heating and cooling rates were at 20°C/min, conducted under nitrogen, which was, used as the purge gas with a flow rate of 25mL/min. Three sequential heating and cooling programs were carried out for all the samples as heating, cooling, and heating scans. The first heating scan was from -20°C to 290°C, whereafter the samples were cooled from 290°C to -20°C. The second heating scan was again from -20°C to 290°C. The first heating scan was used to erase all the samples' thermal history. The different samples' glass transition temperatures, melting temperatures, cold crystallization temperatures, the enthalpies of melting and the cold crystallization enthalpies were determined during the second heating scan. Four tests run per sample was carried out and the average is reported for standard data accuracy. The percent crystallinity of fibre-reinforced plastic (FRP) composites is normally calculated based on the thermoplastic matrix alone. It is a function of the melting (fusion) and crystallization (solidification) of the matrix. Therefore, Equation 1 below was used to calculate the degree (percentage) of crystallinity (Xc) of the composites.

$$Xc\langle\%\rangle = \Delta Hm - \Delta Hcc \; \Delta Hf \times 100 \qquad \text{Equation (1)}$$

where: $\Delta Hm$ is the enthalpy heat of melting in (J/g),
$\Delta Hcc$ is the cold crystallization enthalpy in (J/g), and
$\Delta Hf$ is the heat of fusion in (J/g) and is defined as the theoretical melting enthalpy of an ideally 100% crystalline PLA at 93 J/g.

## Thermogravimetric analysis

Thermogravimetric analysis (TGA) of the nanocomposite samples was studied by using a TGA 5500 (TA Instruments, USA). The samples' masses were between 9mg and 10mg and the samples were heated from room temperature to 900°C at a heating rate of 10°C/min, under an ambient atmosphere. Equation 2 was used to calculate the weight (%). Four tests run per sample was carried out and the average reported for standard data accuracy.

$$\text{Weight } \langle\%\rangle = \frac{m_{wt}}{m_{o}} \times 100 \qquad \text{Equation (2)}$$

where ($m_{wt}$) is expressed as the temperature-dependent weight loss, ($m_o$) is the actual weight of the test during the heating period in the thermogravimetric analyser.

## Dynamic mechanical analysis

A dynamic mechanical analyser (DMA 8000, PerkinElmer, MA, USA) was used to determine the dynamic

mechanical properties of the nanocomposite samples. The tests on the annealed samples were performed in a dual cantilever mode by using a 1 Hz frequency under nitrogen atmosphere. The strain amplitude was set at 0.05% with 0.05mm displacement and a heating rate of 2°C/min over a temperature range of from -100°C to 130°C. The storage modulus (E'), loss modulus (E") and loss factor (tan $\delta$), were obtained as functions of temperature. The storage moduli of the nanocomposite samples are tabulated at the specified temperatures of 23°C.

### Tensile test

A tensile test machine (Instron 5966, Instron Engineering Corporation, MA; USA) was used for tensile testing of the different annealed nanocomposite samples. The samples were compression moulded into flat sheets and cut into dumbbell-shapes by a laser cutting machine. The dimensions were gauge length of 25mm, mean width value of 10mm and mean thickness value of 2mm. The machine was equipped with a 10 kN load cell and a strain rate of 5mm/min was applied for testing at 23 ± 0.1°C and 40% RH. The samples were evaluated as the mean values of at least five test specimens for the different nanocomposite samples prepared.

### Flexural test

The flexural properties of the different annealed PLA samples were evaluated using ASTM D 7264/ 7264M-07. Flexural tests were performed on an Instron 5966 universal testing machine (Instron Engineering Corporation, USA) with a fixed load cell of 10 kN. The samples were compression moulded into flat sheets and cut into rectangular-beam shapes by a laser cutting machine. The dimensions of the test samples prepared are length of 120mm, mean width of 12.4mm and mean thickness of 2.1mm. The span-to-thickness ratio used was 16:1 and exerted under flexure mode at a single strain rate of 1mm/min at 23 ± 0.1°C, 40% RH. The samples were evaluated as the mean values of at least five test specimens for the different nanocomposite sample prepared.

### Charpy toughness test

Mechanical impact resistance tests were carried out on the annealed nanocomposite samples with a Charpy toughness-testing machine, Resil Impactor II instrumented pendulum (CEAST, Torino, Italy). Tests were carried out at room temperature by using ISO 179 specifications. The samples were compression-moulded into flat sheets and cut into rectangular-beam shapes by a laser cutting machine. The dimensions of the test samples prepared are length of 85mm, width of 10mm and mean thickness of 2.1mm. The samples were notched and a 15J pendulum was used to strike the notched samples. The resilience in kJ/m2 required to break each test specimen in a one pendulum swing was recorded. The impact speed was set at 3.686m/s and tests were carried out at 23°C±0.1°C. The results recorded are the mean values of at least five test specimens from each of the different nanocomposite samples prepared.

## Results and Discussion

### Results of Efibres

### Dimensions

The results of the density, thickness, average fibre diameter (AFD) and the mechanical properties of the Efibres are displayed **in Table 2.**

**Table 2: The Dimensions of the Efibres**

| Samples | Diameter (nm) | Thickness of mat (cm) | Density ($g/cm^3$) | Tensile Modulus (GPa) | Tensile Elongation (%) | Tensile Strength (MPa) | Specific TensileModulus ($GPa.cm^3/g$) | Specific Tensile Strength($MPa.cm^3/g$) |
|---|---|---|---|---|---|---|---|---|
| rPET Efibre | 139.52±3 1.53 | 0.012 | 1.12 | 158.28±8.25 | 202.591± 6.33 | 5.53±0. 58 | 0.13 | 4.69 |
| rEPS Efibre | 413.69±1 09.10 | 0.025 | 0.89 | 59.11±3.27 | 51.14±5. 08 | 0.72±0. 08 | 0.07 | 0.82 |

### SEM morphology of the Efibres

The Efibre diameter distributions are shown in Figure 2. The average fibre diameter (AFD) of the Efibres were measured from the SEM micrographs and are shown in Table 2.

## Results and Discussions of the Nanocomposite Materials

### Fourier transform infrared spectroscopy

FTIR was used as the spectroscopical method to identify the molecular characteristics and investigate the type of interfacial interaction in the composites. The spectra of the UNPLA, UMPLA and the various nanocomposite samples with their molecular fingerprint and distinctive characteristics transmittance bands are shown in Figure 3.

The chemical structure for UNPLA (Neat PLA) is shown in the FTIR spectra displayed in Figure 3. The UNPLA spectrum shows an -OH stretching at 3395 cm-1, $-CH_2$ stretching vibrations in the wavenumber range of between 2997cm$^{-1}$ and 2853cm$^{-1}$, carbonyl group -C=O stretching of ester bond at 1750cm$^{-1}$, asymmetrical deformation mode and $-CH_3$ asymmetric bending at 1452cm$^{-1}$. There is $-CH_3$ symmetric bending at 1364cm$^{-1}$ and 1262cm$^{-1}$, symmetrical C-O-C stretching at 1185cm$^{-1}$, C-O stretch at 1081cm$^{-1}$, an -OH stretching at 1044cm$^{-1}$ and a C-O-C stretching at 867cm$^{-1}$.

The FTIR spectra of all the samples displayed in Figure 3 have chemical compositions that are similar. The UMPLA (Mod PLA) spectrum is also similar to the UNPLA spectrum, except for the slight shifts in the absorption peaks, due to molecular interactions with the lanolin-based plasticizer oil. Consequently, the FTIR spectra of the neat PLA-Efibres and the mod PLA-Efibres nanocomposites are almost the same as the UNPLA and UMPLA spectra, respectively. There were however some slight shifts and new bonds that were formed due to chemical interactions between the PLA matrices and the reinforcing Efibres. The Efibres reinforced PLA composites show the development of a small peak, $CH_3$ symmetrical bending at 1383-1380cm$^{-1}$. This peak is attached to the $CH_3$ symmetric bending peak around 1364cm$^{-1}$, which shifted slightly to lower wavenumbers for the PLA-Efibres composites. The broadband due to -OH stretching (-OH of alcoholic and carboxylic) for the UNPLA and UMPLA samples, with intensity at around 3395cm$^{-1}$, became less prominent. It shifted slightly to lower wave numbers at around 3278cm$^{-1}$ for the Efibres-reinforced PLA nanocomposites. This was caused by the formation of hydrogen bonds by some of the free hydroxyl groups. In addition, this can likely be due to the chemical reaction by the addition of the reinforcing Efibres to the matrices, which enhanced interfacial adhesion. The interfacial adhesion could also be affected by the chemical modification of the Efibres. The treatment was to roughen the surfaces of the Efibres to initiate interlocking within its large aspect ratio, and to improve the interaction between the nanofibres and the PLA matrix.

Based on the Efibre configurations of the nanocomposite samples, the following was observed. For the nanocomposite reinforced with unmixed PET Efibres or hybrid Efibres with PET as the outer layers, there is the possibility of transesterification between the PLA matrix and the PET chains, generated from the degraded PLA, during the compression moulding process. This is so since there is a possible reaction between the free carboxyl and hydroxyl end groups from the degraded PLA and the acyl oxygen of PET that generated the PLA PET-chains, hence, enhancing their compatibility. When PET and PLA are combined, the thermal stability of the PLA is enhanced, which implies that there is interaction between both polymers.

In addition, another new peak at around 3505cm$^{-1}$ was formed, resulting in the formation of a dimeric -OH stretching, due to the presence of the reinforcing Efibres. The exception to the position of the new peaks were for the unmixed Efibres configurations, neat PLA-PET and neat PLA-EPS composites. The neat PLA-PET nanocomposite only had a new peak formed at around 3307cm$^{-1}$, while the neat PLA-EPS had its new peaks formed at around 3394cm$^{-1}$ and 3508cm$^{-1}$, in contrast to the other composites.

### X-ray Powder diffraction

XRPD was employed to investigate the crystalline structures of the UNPLA matrix, UMPLA matrix and the nanocomposite materials. The diffractograms are shown in Figure 4 and they demonstrate the XRPD pattern of the matrices and the various nanocomposite samples, while a summary of an analysis of the XRPD is tabulated in Table 3. The diffraction pattern for the UNPLA matrix (Neat PLA) showed an amorphous characteristic peak in the form of a broad and diffused diffraction peak at around 2θ value of 16.42°, which confirms its amorphous structure. The peaks of the neat PLA-Efibres nanocomposites shifted between 16.04° and 17.15°. The neat PLA-HyPEP Efibre nanocomposite shifted to the highest 2θ value; it had the strongest intensity with a crystalline peak at 2θ value of 17.15°, as displayed in Table 3. The UMPLA matrix showed a distinct amorphous peak that shifted to 16.79°, which also confirms and validates the amorphous microstructure of PLA. The peaks of the mod PLA-Efibres nanocomposites shifted to between 15.58° and 16.88°. Again, the mod PLA-PET Efibre nanocomposite had the highest 2θ value at 16.88°. The XRPD analyses of the various nanocomposites generally showed an amorphous microstructure due to the incorporation of the Efibres. The FFL oil

plasticizer present in the mod PLA did not show any remarkable influence on the crystalline structure of the mod PLA nanocomposites.

The XRPD analysis was based on the Efibre configuration systems for the nanocomposite samples. The diffraction peaks of the nanocomposites were reinforced with unmixed PET Efibres or hybrid Efibres with PET as the outer layers. The 2θ value of the neat PLA-HyPEP Efibre nanocomposite was the strongest for this system. Likewise, the nanocomposites were reinforced with unmixed EPS Efibres or hybrid Efibres with EPS as the outer layers. The 2θ value where the diffraction peak of the neat PLA-HyEPE Efibre nanocomposite occurred was the highest. This confirms the fact that the crystalline structures of PLA in these nanocomposites increased slightly, with the integration of the hybrid Efibres. In all accounts, the neat PLA-HyPEP had better crystalline region and would make the crystallization process easier when the Efibres are incorporated into the PLA matrix.

**Table 3:** X-ray Powder Diffraction patterns of the UNPLA, UMPLA and the PLA-Efibres Nanocomposites

| Composite Sample Formulation (Matrix-Fibre Configuration) | Diffraction Peaks 2θ (Degrees) |
|---|---|
| Neat PLA Matrix | 16.42±0.452 |
| Mod PLA Matrix | 16.79±0.130 |
| Neat PLA-PET | 16.15±0.001 |
| Mod PLA-PET | 16.88±0.003 |
| Neat PLA-EPS | 16.04±0.011 |
| Mod PLA-EPS | 16.12±0.006 |
| Neat PLA-HyPEP | 17.15±0.001 |
| Mod PLA-HyPEP | 15.58±0.006 |
| Neat PLA-HyEPE | 16.92±0.019 |
| Mod PLA-HyEPE | 16.44±0.001 |

**Scanning electron microscopy**

The SEM morphology of the various PLA-Efibre nanocomposites is valuable in the assessment of their physico-mechanical properties. Therefore, the fractured surface morphology of the nanocomposite materials was studied by SEM and the micrographs are displayed in Figure 5. The fractured surfaces were investigated to reveal PLA-Efibres interface. The micrographs of Figure 5(a-d) show the nanocomposites that are reinforced with unmixed Efibres. However, the neat PLA-PET Efibres nanocomposites and the mod PLA-PET Efibres in Figure 5(a, b) show that the fibres are not displayed wholly in the original form in which they were initially laid, but some pulled-out PET Efibres are observed. The neat PLA-EPS Efibre nanocomposites and mod PLA-EPS Efibre nanocomposites in Figure 5(c, d) also show fibres that are not in the initial form. A few pulled-out fibres were observed and perhaps the matrix covered some of the fibres, while others were degraded during melting. It is noteworthy that the compounding temperature that was used for the composites was set at 185°C. This temperature was below the melting temperature of PET, which is about 260°C, thus more PET Efibres maintained their fibrous morphology in the fabricated composite, whereas EPS has a lower melting temperature, i.e., ~100°C, which caused most of the EPS Efibres to melt, degrade or deform.

The SEM micrographs in Figure 5(e-h) show the PLA nanocomposites reinforced with the hybrid Efibres. When the Efibres arrangement is HyPEP, as shown in Figure 5(e, f), there were no fibre pull-outs and the Efibres did not show signs of deformations resulting from the melting operation. The matrices, in the form of a thin films, however covered some of the Efibres. As this is the case, the interaction between the fibres and the matrix would improve, which leads to a better interfacial adhesion, which is confirmed by the FTIR spectroscopy in Figure 3. This arrangement of the fibres validates some of the higher mechanical properties for these composites as observed. It indicates the fact that the applied stress was better transferred from the matrices to the reinforced Efibres, thereby increasing the performance of these composites.

The PLA nanocomposites reinforced with the HyEPE Efibres arrangement, shown in Figure 5(g,h), show similar features as the HyPEP Efibres. There was also no fibre pull-out and perhaps some Efibres got degraded due to melting and were covered with some of the melted PLA matrices, hence, forming a thin film layer. This is so since the EPS Efibres were on the exteriors of the fibre arrangements, as shown in Figure 5(g, h).

Other microstructural features show that the micrographs of the neat PLA-Efibre nanocomposites in Figure 5(a, c, e, g) have similar PLA continuous phases, as displayed in the SEM micrographs. The micrographs of the dispersed phases of the mod PLA matrices in Figure 5(b, d, f, h) show spherical voids, formed in the continuous PLA phase, because of the presence of the FFL oil plasticizer. Overall, the PLA-Efibre nanocomposites show some degree of interaction and some adhesion between the PLA matrices and the Efibres.

**Differential scanning calorimetry (DSC)**

DSC was used to study the thermal event of the various PLA-Efibre nanocomposite samples since they absorb and release heat energy when the samples are heated or cooled. Figure 6 shows DSC thermograms of the various nanocomposite samples. The thermal data obtained from the DSC studies for the various samples are summarized in Table 4.

The thermal transitions from the characteristic DSC curves in Figure 6 show that the Tg of UNPLA is around 60.58°C, whereas the Tg of the various neat PLA-Efibre nanocomposite samples decreased to between 58.32°C and 60.44°C. In addition, the Tg of UMPLA is around 58.63°C, while that of the various mod PLA-Efibre nanocomposite samples decreased to between 54.42°C and 59.42°C. The addition of Efibres to PLA decreased the Tg. However, the change in Tg is minimal, therefore, for most of the neat PLA-Efibre nanocomposites and for the mod PLA-Efibres nanocomposites, the changes were not significant with respect to the UNPLA and UMPLA. As the FFL oil plasticizer is an effective plasticizer for PLA, its addition to PLA enhanced the molecular motions, exhibited by a high decrease of Tg in the plasticized PLA. Based on the Efibre configuration systems, Table 4 shows that the nanocomposites reinforced with unmixed EPS Efibres, or hybrid Efibres with EPS (as the outer layers), had higher Tg values than those reinforced with unmixed PET Efibres, or hybrid hyPET Efibres. In these systems, the neat PLA-HyEPE Efibre nanocomposites had the highest Tg values.

The Tm, with peak temperatures as shown in Figures 6 for UNPLA (Neat PLA) is around 154.34°C, while the neat PLA-Efibre nanocomposite samples decreased to between 153.10°C and 154.80°C. The Tm of UMPLA (Mod PLA) is ~151.91°C, while the mod PLA-Efibre nanocomposite samples decreased to between 149.01°C and 153.73°C. The UMPLA and the mod PLA-Efibre nanocomposite samples had double melting peaks, whereas the double peaks were absent for the UNPLA and the neat PLA-Efibre nanocomposite samples. The double endothermic melting peaks observed in the mod PLA are due to lamellar reorganization and the development of two different lamellar thicknesses. Based on the Efibre configuration of the systems, Table 4 shows that neat PLA-Hy PEP Efibre nanocomposites had the highest Tm value among the unmixed PET Efibre nanocomposites and the hybrid configuration with PET as the outer layers. The mod PLA-PET Efibre nanocomposites had the highest Tm values among the unmixed EPS Efibre nanocomposites and the hybrid configuration with EPS as the outer layer. The double melting peaks become more pronounced with the incorporation of the unmixed PET Efibres and EPS Efibres into the mod PLA.

The Tcc of the nanocomposites increased after the addition of the Efibres reinforcements to the matrices. The Tcc with peak temperatures as shown in Figures 6 for UNPLA, is ~125.06°C and slightly increased to between 124.24°C and 127.21°C for the neat PLA-Efibre nanocomposite samples. On the other hand, the UMPLA is ~126.03°C, while the mod PLA-Efibre nanocomposites samples were between 119.25°C and 125.96°C. The change in the Tcc accelerated the crystallization of the polymer chains, upon cooling. The Efibres act as nucleating agents and offer sites for the initiation of crystallization of the polymer chains. This is in addition to the development of spherulites growth, which led to increased Tcc. Hence, the increase in the Tcc is due to nucleation and diffusion-controlled growth developments. The Tcc based on the Efibre configuration systems in Table 4 shows that the neat PLA-PET Efibre nanocomposite had the highest Tcc value among the unmixed PET Efibre nanocomposites and the hybrid configuration with PET as the outer layers. However, the mod PLA-Hy EPE Efibre nanocomposites had the highest Tcc value among the unmixed EPS Efibre nanocomposites and hybrid configuration with EPS as the outer layer.

DSC was used to measure the difference in the crystallinity between the PLA matrices and the PLA-Efibres nanocomposites produced, in addition, to ascertaining the influence of the Efibres on the mechanical properties of the

nanocomposites. The percent crystallinity (Xc) was calculated from the DSC measurements according to Equation 1. It can be observed in Table 4 that the Xc of the UNPLA (Neat PLA Matrix) is higher when compared to the neat PLA-Efibre nanocomposite samples. The Xc of the UMPLA (Mod PLA Matrix) is also higher when compared to the mod PLA-Efibre nanocomposite samples, except the mod PLA-HyEPE Efibre nanocomposite. The decrease in the crystallinity of the nanocomposite materials is due to the intermolecular interactions between the PLA matrices and Efibre reinforcements. This decreased the mobility of the PLA polymer chains, thus allowing the rearrangement of the polymer chains during crystallization and a reduction in brittleness of the nanocomposites. However, the neat PLA-HyPEP Efibre and the mod PLA-HyEPE Efibre nanocomposites with higher Xc increased in brittleness as can be observed in Table 7. The decrease in crystallinity may be due to intermolecular interactions between the PLA matrices and Efibre reinforcements, caused by lower mobility of the polymer chains, as observed from the FTIR analysis.

**Table 4:** DSC Parameter of the UNPLA, UMPLA and the PLA-Efibre Nanocomposites

| Composite Sample Formulations (Matrix-EFibre Configurations) | Tg (°C) | ΔHcc (J/g) | Tcc (°C) | ΔHm (J/g) | Tm (°C) | Xc (%) |
|---|---|---|---|---|---|---|
| **Neat PLA Matrix** | 60.58±1.15 | 18.96±0.82 | 125.06±0.07 | 24.91±1.23 | 154.34±0.08 | 3.63±1.12 |
| **Mod PLA Matrix** | 58.63±0.42 | 12.27±1.42 | 126.03±0.11 | 21.58±1.23 | 151.91±0.38 | 2.41±1.04 |
| **Neat PLA-PET** | 58.32±1.56 | 15.72±1.90 | 127.21±5.17 | 16.34±0.19 | 153.10±0.11 | 1.40±1.11 |
| **Mod PLA-PET** | 59.42±2.91 | 28.87±0.76 | 119.25±0.19 | 31.28±1.69 | 153.73±0.01 | 2.60±2.64 |
| **Neat PLA-EPS** | 58.45±1.80 | 27.06±0.22 | 122.99±0.38 | 29.30±1.19 | 153.83±0.29 | 2.41±0.45 |
| **Mod PLA EPS** | 58.81±0.43 | 29.75±0.19 | 121.23±0.14 | 31.54±0.69 | 151.09±3.79 | 1.92±0.53 |
| **Neat PLA-HyPEP** | 60.29±0.77 | 25.15±4.48 | 125.24±0.56 | 28.54±4.48 | 154.80±1.16 | 3.39±0.29 |
| **Mod PLA-HyPEP** | 54.42±6.37 | 20.64±3.26 | 124.27±0.35 | 22.61±1.67 | 149.01±1.09 | 1.37±0.65 |
| **Neat PLA-HyEPE** | 60.44±0.42 | 29.65±0.83 | 124.24±0.63 | 31.71±0.11 | 154.61±0.92 | 2.23±0.64 |
| **Mod PLA-HyEPE** | 58.16±7.52 | 19.45±1.25 | 125.96±0.88 | 22.84±0.43 | 151.97±1.63 | 3.26±0.88 |

**Thermogravimetric analysis (TGA)**

TGA was employed to evaluate the thermal behaviour of the nanocomposite samples by measuring the mass changes as a function of temperature. The data acquired from the analysis was used to assess the nature and extent of thermal degradation and thermal stability of the nanocomposite materials. Figures 7 shows the integral TGA and derivative (DTG) thermograms of the various nanocomposite samples and the thermal characteristics obtained from the TGA studies are summarized in Table 5. The characteristic thermal stability of the various PLA-Efibre nanocomposite samples was determined by comparing the decomposition temperatures at specific weight losses. The thermal characteristics are the initial temperature of decomposition rate at 5% weight loss (T5), temperatures at 50% weight loss (*T50*), and the maximum temperature of the decomposition rate of weight loss (*Tmax*).

The initial decomposition at *T*5% weight loss of the neat PLA-Efibre nanocomposites was from 322.32°C to 324.61°C, as displayed in Table 5, whereas the thermal stability of UNPLA matrix (Neat PLA Matrix) was slightly lower at 317.12°C. In addition, the neat PLA-Efibre nanocomposites' *T50%* weight loss was from 355.91°C to 359.19°C when compared to 357.09°C for the UNPLA matrix. An inverse behaviour was observed for the mod PLA-Efibre nanocomposites that were fabricated with mod PLA matrices, as displayed in Table 5. The *T5%* weight loss was from 309.48 °C to 313.16°C, which was slightly lower in thermal stability when compared with the UMPLA matrix at 317.23°C. The mod PLA-Efibre nanocomposites at *T50%* weight loss was from 357.63°C to 360.11°C when compared to 354.22°C for the UMPLA matrix nanocomposites. The shift to higher temperatures when Efibre is added to the UNPLA matrix leads to better thermal stability of the nanocomposites. The decrease in the thermal stability when Efibre is added to the UMPLA matrices is believed to account for the lower miscibility between the mod PLA matrices and the Efibre reinforcements. Moreover, there is higher evaporation of the volatile degradation products, produced in the thermal decomposition of the mod PLA-Efibre composites, which lowered their thermal stability.

The thermal decomposition of the various PLA-Efibre nanocomposites is shown in Figure 7. The decomposition of the neat PLA-Efibre nanocomposites consists of two stages, while the decomposition of the mod PLA-Efibre nanocomposites exhibited three stages due to the presence of the plasticizer additive. These stages correspond with the peak temperatures obtained from the DTG curves that aligned with the maximum decomposition rates (Tmax), as

shown in Figure 7. For the decomposition of the neat PLA-Efibre nanocomposites that consists of two stages, the first stage is at (*Tmax2*), whereas the *Tmax2* of UNPLA is at 362.32°C with a different reduced stage at 436.0°C. The second stage of the neat PLAEfibre nanocomposites is at *(Tmax3)* and is from 437.67°C to 494.72°C. The *Tmax3* of UNPLA is a small stage at 436.03°C. The decomposition at these stages is due to the macromolecular chains of PLA. The thermal stability of the neat PLA-Efibre nanocomposites increased when reinforced with the Efibres in contrast to the UNPLA.

The thermal decomposition of the various mod PLA-Efibre nanocomposites fabricated with mod PLA matrices are influenced by the FFL oil plasticizer contained in the mod PLA matrices. The peaks at the first stage (*Tmax1*) for the various mod PLA-Efibre nanocomposites are from 170.34°C to 177.61°C. This stage (*Tmax1*) is particularly influenced by the FFL oil plasticizer contained in the mod PLA matrices, with a *Tmax* occurring at 173.56°C (Figure 7). The peaks at the second stage (*Tmax2*) for the mod PLA-Efibre nanocomposites, as shown in Figure 7, are from 358.14°C to 344.35°C. The peaks at *Tmax2* are due to the decomposition of the macromolecular chains of the PLA polymer. The *Tmax2* of the UMPLA is at 361.88°C, as shown in Table 5 and it recorded a higher thermal stability than the *Tmax2* of the mod PLA-Efibre nanocomposites. The third stage, (*Tmax3*) for the mod PLA-Efibre nanocomposites, as shown in Figure 7, is also influenced by the decomposition of the FFL oil plasticizer present in the mod PLA matrices and their respective nanocomposites. The plasticizer is believed to have accelerated the decomposition process and increased the diffusion of the volatile degradation products out of the samples. The peaks at *Tmax3,* for the mod PLA-Efibre nanocomposites, are from 423.86°C to 478.56°C and this shows an increase in the thermal stability of these composites over the UMPLA that has its *Tmax* at 416.37°C (Figure7).

When the TGA was based on the Efibre configurations in the nanocomposite samples, the following was observed. The nanocomposites reinforced with unmixed PET Efibres or the hybrid Efibres with PET as the outer layers, had higher thermal stability than the EPS counterparts, while the neat PLA-PET Efibre nanocomposites had the highest in this group of PET reinforcing Efibres. In contrast, the nanocomposites reinforced with unmixed EPS Efibre or the hybrid Efibres with EPS, as the outer layers, recorded a lower thermal stability compared to the PET counterparts. The mod PLA-HyEPE Efibre nanocomposites however had the highest thermal stability in this group of EPS reinforcing Efibres. The decrease in thermal stability can be accounted for from the melting and the deformity of the EPS Efibres during the fabrication of mod PLA-Efibre nanocomposites as revealed by the SEM images in Figure 5.

The general profile of the degradation curves is comparable for all the nanocomposite samples and the total weight loss occurred between 400°C and 500°C. The neat PLA-Efibres nanocomposites had better thermal stability compared with mod PLA-Efibre nanocomposites. In addition, neat PLA-PET Efibre nanocomposites had better thermal stability among the neat PLA-Efibre nanocomposites. Among the mod PLA-Efibre nanocomposite formulations, the mod PLA-HyEPE Efibre nanocomposites had better thermal stability.

**Table 5:** TGA Parameter of the UNPLA, UMPLA and the PLA-Efibres Nanocomposites Composite

| Composite Sample Formulation (Matrix-rEfibre Configuration) | $T_{5\%}$ (°C) | $T_{50\%}$ (°C) | $T_{max1}$ (°C) | $T_{max2}$ (°C) | $T_{max3}$ (°C) | Yield (at 700 °C) |
|---|---|---|---|---|---|---|
| **Neat PLA Matrix** | 317.12±2.37 | 357.09±1.88 | | 362.32±2.34 | 436.03±4.65 | 0.05±0.12 |
| **Mod PLA Matrix** | 317.23±1.89 | 357.63±1.96 | 173.56±1.72 | 361.88±0.83 | 416.37±0.48 | 0.09±0.07 |
| **Neat PLA-PET** | 324.46±3.78 | 359.19±1.57 | | 362.50±2.33 | 494.72±3.82 | 0.07±0.11 |
| **Mod PLA-PET** | 313.16±5.54 | 360.11±1.90 | 173.02±1.65 | 364.21±3.01 | 478.56±2.11 | 0.19±0.14 |
| **Neat PLA-EPS** | 322.32±7.12 | 355.91±3.13 | | 359.10±3.12 | 472.56±3.32 | 0.12±0.01 |
| **Mod PLA-EPS** | 312.98±6.61 | 356.16±1.49 | 169.95±1.41 | 358.14±2.79 | 443.02±3.18 | 0.09±0.03 |
| **Neat PLA-PETEPSPET** | 324.61±4.32 | 357.52±3.76 | | 361.22±2.54 | 482.76±3.16 | 0.49±0.34 |
| **Mod PLA-PETEPSPET** | 312.80±1.77 | 354.22±2.09 | 177.761±1.03 | 358.69±3.51 | 423.86±1.97 | 0.29±0.12 |
| **Neat PLA-EPSPETEPS** | 323.64±4.89 | 356.25±1.73 | | 360.05±4.22 | 437.67±3.67 | 0.13±0.09 |
| **Mod PLA-EPSPETEPS** | 309.48±5.64 | 359.99±2.13 | 170.34±2.06 | 364.35±2.81 | 477.82±4.22 | 0.01±0.21 |

**Dynamic Mechanical Analysis (DMA)**

DMA was used to study the viscoelastic properties of the PLA-Efibre nanocomposite materials over a range of temperatures. Figures 8 shows how the addition of the Efibres in their different configurations affected the elastic (storage) modulus (E'), loss (viscous) modulus (E") and mechanical loss factor (tan δ) of the various PLA-Efibre nanocomposites. The DMA data for the PLA-Efibre nanocomposite samples is tabulated in Table 6. The glassy, leathery, and rubbery regions are displayed in Figure 8(a). In the glassy region, the molecules of the polymers are in a frozen state and their motion is considerably restricted. The polymers are hard, brittle, and rigid in this state and after heating for a while, the molecular chains of the polymers begin to soften and move around. It then transits from the glassy region to another region, which is the leathery region. In the leathery region, there is a sharp reduction in the storage moduli, i.e., between 70°C and 74°C for the various nanocomposites. This correlates to the dynamic β-relaxation peaks of the amorphous regions in the PLA. The temperature at which this transition takes place for each nanocomposite sample is the Tg, as depicted in Figure 8(b). The Tg range spans across the base of each tan δ peak, as shown in the tan delta curves, and for all the composites the peaks are between 45°C and 85°C, as shown in Figure 8(b). The rubbery plateau region is the next segment of the transition profile and in this region, the storage moduli of the samples start to rise again, forming peaks at temperatures around 90°C. This correlates to the dynamic α-relaxation peaks. The temperature range for this transition is between 85°C and 130°C for all the PLA-Efibre nanocomposites, as shown in Figure 8(a'-insert). This correlates to the cold crystallization process, which is a usual feature for PLA polymer.

The evaluation of the storage modulus, among other characteristics, is of utmost significance in understanding the load-bearing capacity of nanocomposite samples. Therefore, the storage moduli are reported at 23°C in Table 6. This temperature was selected as a practical guide to evaluating the stiffness of the samples and for assessing the load-bearing properties of the samples. There were no specific increasing or decreasing trends with the addition of the Efibres in the storage moduli of the nanocomposites. There is a decrease in the storage moduli of most of the neat PLA-Efibres nanocomposites, with respect to the UNPLA, except for neat PLA-EPS and neat PLA-HyPEP. In addition, the storage moduli of the mod PLA-Efibres nanocomposites decreased in relation to the UMPLA, except for the mod PLA-PETand the mod PLA-HyPEP nanocomposites. The increase in the storage modulus of the mentioned nanocomposites is affected by the increase in the stiffness of the PLA matrices due to constraints in the segmental motion, caused by the reinforcing Efibres. In addition, there is better compatibility, leading to a better interfacial adhesion between the Efibres and the PLA matrices. Overall, the values of the storage modulus obtained from the DMA data agreed with the tensile modulus measurements.

The tan δ of the PLA-Efibre nanocomposites is the ratio of the storage to loss moduli as a function of temperature and the effect of the Efibres inclusions in the PLA. The Tan δ curves are shown in Figure 8 (b) and were used to study the Tg

of the unreinforced and reinforced PLA matrices. As displayed in Table 6, the Tg of UNPLA is ~71.98°C, whereas the Tg of the various neat PLA-Efibre nanocomposites is approximately 73°C. Likewise, the Tg of UMPLA is ~70.87°C, while that of the various mod PLA-Efibre nanocomposites are between 70.22°C and 72.02°C. The addition of the Efibres, virtually, increased the Tg of all the PLA-Efibre nanocomposites, which could mean that the presence of Efibres inhibits the segmental motion of the amorphous polymer chains at the fibre-matrix interface. The Tg of the neat PLA nanocomposites is higher than the Tg of the mod PLA nanocomposites. However, the reduction of the Tg in the mod PLA nanocomposites when compared to the neat PLA composites is due to the plasticization effect. The plasticization of the mod PLA increases the molecular chain mobility, elasticity, and elongation of the polymer chains, thereby decreasing the intermolecular cohesive forces between the polymer chains. The differences in the Tg values obtained from DSC and DMA are not unexpected, because of the different thermal measurement methods. The Tg value from the DMA analysis is however acknowledged to be more precise.

The peak intensity of the loss modulus curve typically indicates the melt viscosity of a polymer. The loss moduli curves in Figure 8(c) show that the neat PLA nanocomposites incorporated with Efibres shifted to higher loss modulus compared to the UNPLA and the mod PLA nanocomposites. This may be due to better interphase interaction or interfacial bonding between neat PLA and the Efibres. The UMPLA loss modulus also shifted to higher values when compared to the mod PLA nanocomposites.

The PLA-Efibre nanocomposite were not significantly affected by the hybridization of the Efibres. The neat PLA-HyPEP Efibre nanocomposite had the highest tan δ storage and loss moduli values. Therefore, it had the optimum properties from the DMA when compared to the other nanocomposite samples.

**Table 6: DMA Properties of the UNPLA, UMPLA and the PLA-Efibre Nanocomposites**

| Composite Sample Formulation (Matrix-rEfibre Configuration) | Tg (°C) | Storage Modulus (Pa.$10^{10}$) at 23 °C |
|---|---|---|
| Neat PLA Matrix | 71.98±1.00 | 1.90±0.16 |
| Mod PLA Matrix | 70.87±0.47 | 1.56±0.15 |
| Neat PLA-PET | 73.13±0.06 | 1.37±0.32 |
| Mod PLA-PET | 72.02±0.17 | 1.61±0.25 |
| Neat PLA-EPS | 73.07±0.05 | 2.07±0.30 |
| Mod PLA-EPS | 71.34±0.13 | 1.58±0.27 |
| Neat PLA-HyPEP | 73.09±0.00 | 2.73±0.04 |
| Mod PLA-HyPEP | 70.22±0.23 | 2.00±0.23 |
| Neat PLA-HyEPE | 73.04±0.11 | 1.33±0.09 |
| Mod PLA-HyEPE | 71.67±0.02 | 0.93±0.16 |

**Tensile properties**

A summary of the tensile results for the various nanocomposite materials are shown in Table 7. Most of the neat PLA-Efibre nanocomposites had lower moduli, elongation and load-at-yield, but higher tensile strength when compared to UNPLA matrix (Neat PLA Matrix). Most of the mod PLA-Efibre nanocomposites also had lower moduli, tensile strength, load-at-yield, but higher tensile elongation than the UMPLA matrix (Mod PLA Matrix).

Generally, the neat PLA-Efibre nanocomposites had higher modulus, tensile strength and load-at-yield when compared to their modified PLA-Efibre nanocomposites counterparts, as displayed in the graphs in Figure 9. The mod PLA nanocomposites had higher elongation-at-break over the neat PLA nanocomposites because of the plasticization effect of the FFL oil plasticizer.

Among the various nanocomposites, due to the fibre configuration systems, the neat PLA-HyPEP Efibre

nanocomposites had the highest modulus, load-at-yield and tensile strength. This is so as a crystalline structure was observed from the XRPD analysis. In the DSC analysis it recorded the highest degree of crystallinity and shifted towards the highest melting temperature, which enhanced its mechanical properties. The greater the crystallinity, the less movement the molecular chains would have, since they do not slide past one another easily due to the greater associated frictional forces, therefore, the nanocomposites would be harder. This led to a reduced stress deformation, greater tensile strength and overall better mechanical properties, except for the reduction in ductility.

The mod PLA-HyEPE Efibre nanocomposites had the highest tensile modulus among the mod PLA-Efibre nanocomposites. Therefore, the tensile properties increased with the incorporation of the hybrid Efibres in comparison to the unmixed Efibres. The UNPLA and UMPLA samples recorded better tensile properties than the Efibre-reinforced PLA nanocomposites because of the effect of the incorporated Efibres. The exception is the mod PLA-HyPEP Efibre nanocomposites that had near and better tensile properties to the UNPLA and UMPLA samples.

**Table 7: Tensile Properties of the UNPLA, UMPLA and the PLA-Efibre Nanocomposites.**

| Composite Sample Formulations (Matrix/ Fibre Configuration) | Tensile Modulus (MPa) | Tensile Elongation at Break (%) | Tensile Strength (MPa) | Tensile Load at Yield (N) |
|---|---|---|---|---|
| Neat PLA Matrix | 3249.36±40.38 | 5.10±0.28 | 112.42±1.67 | 1101.86±29.65 |
| Mod PLA Matrix | 3083.10±71.23 | 7.81±0.64 | 131.92±9.31 | 1307.58±91.46 |
| Neat PLA-PET | 2595.43±138.31 | 4.03±0.24 | 100.58±8.17 | 650.37±52.36 |
| Mod PLA-PET | 2472.23±124.13 | 4.56±0.15 | 64.32±3.12 | 426.69±16.11 |
| Neat PLA-PS | 3066.68±106.24 | 4.70±0.23 | 119.73±6.34 | 782.75±38.37 |
| Mod PLA-PS | 2501.75±132.83 | 5.27±0.47 | 64.57±3.12 | 417.96±6.67 |
| Neat PLA-PETPSPET | 3334.35±54.31 | 4.22±0.13 | 121.60±1.46 | 938.70±6.72 |
| Mod PLA-PETPSPET | 2903.51±80.82 | 6.06±0.64 | 111.37±4.89 | 722.03±31.96 |
| Neat PLA-PSPETPS | 2875.13±63.61 | 4.61±0.13 | 115.13±2.16 | 786.85±39.66 |
| Mod PLA-PSPETPS | 3020.06±89.64 | 5.20±0.32 | 105.57±2.07 | 746.04±11.99 |

**Flexural properties**

A flexural test gives information on the characteristics and behaviour of the nanocomposite samples when it is physically exerted upon with bending stress to understand the flexural properties. Figure 10 shows the flexural properties of the nanocomposite materials. These include the flexural modulus, flexural elongation-at-break, flexural strength-at-break and flexural load-at-yield. The summary of the flexural test outcomes for the various nanocomposite materials are displayed in Table 8.

The flexural modulus is shown in Figure 10, and it is the ratio of stress range to equivalent strain range for the test sample, loaded in the flexure mode. The UNPLA (Neat PLA) has a flexural modulus of 2340.29 MPa when compared to the neat PLA-Efibre nanocomposites that is between 2545.93 MPa and 3181.60 MPa. The UMPLA (Mod PLA) has a flexural modulus of 2336.24MPa, while the mod PLA-Efibre nanocomposites is between 2656.48 MPa and 3494.07 MPa. The flexural strength reflects the ability of a composite material to resist compression and tension stress concurrently. The UNPLA has a flexural strength of 80.56 MPa when compared to the neat PLA-Efibre nanocomposites that is between 80.56 MPa and 103.73 MPa. The UMPLA has a flexural strength of 59.78 MPa, while the mod PLA-Efibre nanocomposites are between 59.78 MPa and 87.85MPa. The addition of the Efibres increased the flexural modulus and flexural strength, which is an indication that stress is transferred from the PLA matrices to the Efibres. The flexural elongation of the UNPLA is 4.52 % and that of the neat PLA-Efibre nanocomposites is between 3.75% and 4.56%. The flexural elongation of UMPLA is 5.75% and that of the neat PLA-Efibre nanocomposites are between 4.00% and 5.20%. The flexural load-at-yield is the

point where the composites can no longer resist the force exerted on it; it reaches its limit of elastic deformation and begins to undergo plastic deformation. The flexural load-at-yield of UNPLA is 141.66 N and that of the neat PLA-Efibre nanocomposites is between 24. 64 N and 103.44 N. The flexural load-at-yield of UMPLA is 91.93 N and that of the neat PLA-Efibre nanocomposites is between 35.33 N and 75.01 N. Generally, the hybrid Efibres reinforced nanocomposites had higher flexural properties when compared to their unmixed Efibres counterparts. Among the various nanocomposites, the neat PLA-HyPEP Efibre nanocomposite recorded better flexural properties.

**Table 8: Flexural Properties of the UNPLA, UMPLA and the PLA-Efibre Nanocomposites**

| Composite Sample Formulation (Matrix/ Fibre Configuration) | Flexural Modulus (MPa) | Flexural Elongation at Break (%) | Flexural Strength (MPa) | Flexural Load at Yield (N) |
|---|---|---|---|---|
| Neat PLA | 2340.29±90.38 | 4.52±0.11 | 80.56±1.35 | 141.66±2.75 |
| Mod PLA | 2336.24±25.24 | 5.75±0.02 | 59.78±0.88 | 91.93±0.75 |
| Neat PLA-PET | 2609.83±106.59 | 4.56±0.31 | 85.67±2.,24 | 54.21±2.36 |
| Mod PLA-PET | 2656.48±124.13 | 4.08±0.31 | 69.78±5.34 | 35.33±2.31 |
| Neat PLA-PS | 2545.93±309.95 | 3.75±0.10 | 52.04±5.04 | 24.64±1.34 |
| Mod PLA-PS | 3494.07±100.17 | 4.00±0.08 | 87.85±1.78 | 67.80±1.05 |
| Neat PLA-HyPEP | 2900.67±184.15 | 5.20±0.07 | 102.97±4.32 | 103.44±2.41 |
| Mod PLA-HyPEP | 2762.55±71.02 | 4.83±0.16 | 77.57±2.06 | 139.77±1.78 |
| Neat PLA-HyEPE | 3181.60±90.38 | 4.20±0.19 | 103.73±1.23 | 75.01±3.10 |
| Mod PLA-HyEPE | 2888.34±166.56 | 4.56±0.08 | 75.78±5.57 | 46.33±2.73 |

**Impact resistance**

A summary of the impact resistance for the various nanocomposite materials are shown in Table 9. The notched Charpy impact strength of the nanocomposite materials with the different Efibre configurations are displayed in Figure 11. Comparative evaluation of the results was carried out in different ways.

Firstly, the impact strengths of the neat PLA-Efibre and the mod PLA-Efibre nanocomposites were higher when compared to the UNPLA and UMPLA matrices, respectively. In addition, the impact strength of the neat PLA-Efibre composites is lower, when compared with the mod PLA-Efibre composites as displayed in Table 9. This is due to the increase in toughness resulting from the plasticization effect that occurred with the use of the mod PLA matrices, which were used in the production of the mod PLA nanocomposite materials. This is also supported by the increase in ductility observed from the tensile test of the mod PLA-Efibre nanocomposites, as displayed in Table 7. The higher ductility and toughness of this group of nanocomposites indicate better compatibility and cohesion between the constituent materials of these nanocomposites.

Secondly, for the nanocomposite reinforced with unmixed PET Efibres, the neat PLA-HyPET Efibres nanocomposite increased by ~41% in impact strength over the UNPLA matrix. The mod PLA-PET Efibre nanocomposite however recorded ~12% decrease over the UMPLA matrix. The decrease in the impact strength of the mod PLA-PET Efibres nanocomposite is due to the poor dispersion of the reinforcing PET Efibres. For the unmixed EPS Efibre reinforced composites, the neat PLA-EPS Efibre nanocomposite recorded an impact strength of ~9.6 kJ/m2, while that of the mod PLA-PET Efibres nanocomposite is ~15.8 kJ/m2. The increments in the impact strengths of these nanocomposites over the UNPLA and UMPLA matrices were ~51% and ~28%, respectively.

Thirdly, the neat PLA-HyPEP Efibre nanocomposite recorded an increase in impact strength of ~74% over the UNPLA matrix, while the mod PLA-HyPEP Efibre nanocomposite recorded an increase in the impact strength of ~29% over the UMPLA matrix. However, the neat PLA-HyEPE Efibre nanocomposite recorded an increase in impact strength of ~64% over the UNPLA matrix. The mod PLA-HyEPE Efibre nanocomposite recorded an increase ~86% over the UMPLA matrix.

Overall, when composites with the various Efibre configurations are compared, the mod PLA-PET Efibre

nanocomposite had the lowest impact strength. This was the only exceptional case of decrease over the UMPLA matrix, as displayed in Table 9. The mod PLA-HyEPE Efibre nanocomposite had the highest impact strength. Furthermore, a comparison between the unmixed and the hybrid Efibre reinforced PLA nanocomposites shows a higher impact strength with the hybrid configuration Efibres than the unmixed Efibres.

**Table 9: Impact Resistance of the UNPLA, UMPLA and the Nanocomposites Composite**

| Composite Sample Formulation (Matrix/ Fibre Configuration) | Resilience ($KJ/m^2$) | Resilience Over Neat PLA (%) | Resilience Over Mod PLA (%) |
|---|---|---|---|
| Neat PLA | 6.32±0.27 | 100 | |
| Mod PLA | 12.34±0.48 | | 100 |
| Neat PLA-PET | 8.91±0.60 | 140.93 | |
| Mod PLA-PET | 10.88±0.68 | | 88.15 |
| Neat PLA-EPS | 9.56±0.28 | 151.31 | |
| Mod PLA-EPS | 15.83±0.74 | | 128.29 |
| Neat PLA-PETEPSPET | 11.02±0.00 | 174.3 | |
| Mod PLA-PETEPSPET | 15.91±0.56 | | 128.92 |
| Neat PLA-EPSPETEPS | 10.39±0.00 | 164.41 | |
| Mod PLA-EPSPETEPS | 22.89±2.19 | | 185.53 |

**Conclusions**

The experimental study described hereinbefore highlights the surprising benefits of using recycled polymer electrospun fibres (Efibres) as reinforcement materials in fibre-reinforced PLA nanocomposites. The work successfully produced unmixed Efibres and hybrid Efibres nanocomposites, based on biodegradable PLA matrix materials.

The following conclusions are drawn from this study.

1) The AFD of the synthesised electrospun fibres are 139.52±31.53 nm and 413.69±109.10 nm for rPET and rEPS Efibres, respectively. The optimum Efibres loading level of ~1.4 wt. % and ~2.9 wt. % was maintained for the unmixed PET and EPS Efibres because additional loading caused accumulation of the Efibres, which could hinder the effective load transfer capability to the PLA matrix.

2) The FTIR spectra of the neat PLA-Efibre and the mod PLA-Efibre nanocomposites are very similar to the UNPLA and UMPLA spectra, respectively. Some new bonds were formed due to chemical interactions between the PLA matrices and the reinforcing Efibres, which enhanced the interfacial adhesion. There is possible transesterification between PLA matrix for the nanocomposite reinforced with unmixed PET Efibres or hybrid PET Efibres as the outer layers. This is due to the reaction between the free carboxyl and hydroxyl end groups from PLA and the acyl oxygen of PET, hence, enhancing their compatibility and thermal stability.

3) The XRD analysis, based on the Efibres reinforced neat and mod PLA nanocomposite systems showed that the $2\theta$ values of the diffraction peaks of the neat PLA-HyPEP Efibre nanocomposite and neat PLA-HyEPE Efibre nanocomposite were the highest. This confirms that the crystallization structure of the matrices increased only slightly, with the integration of the hybrid Efibres.

4) Overall, the SEM micrographs of PLA-Efibre nanocomposites show some interaction and some adhesion between the PLA matrices and the Efibres, aided by the chemical treatments of the Efibres.

5) The DSC thermograms show an increase in *Tcc* value. This is due to the rEfibres, which acted as nucleating agents

and offered sites for the initiation of crystallization of the polymer chains.

6) The general profile of the TGA degradation curves is comparable for all the nanocomposite samples. The neat PLA-Efibres nanocomposites had better thermal stability when compared with the mod PLA-Efibre nanocomposites.

7) There were no specific increasing or decreasing trends with the addition of the Efibres from the DMA storage moduli of the nanocomposites. The addition of the Efibres increased the Tg of all the PLA-Efibre nanocomposites, which means that the presence of Efibres, inhibits the segmental motion of the amorphous polymer chains at the fibre-matrix interface. The Tg of the neat PLA nanocomposites is higher than the Tg of the mod PLA nanocomposites due to the plasticization effect. The neat PLA-HyPEP Efibre nanocomposite had the highest tan $\delta$, storage and loss moduli values. It had the optimum properties from the DMA when compared to the other composites.

8) Generally, the neat PLA-Efibre nanocomposites had higher modulus, tensile strength and load-at-yield when compared to their mod PLA-Efibre nanocomposite counterparts. The mod PLA nanocomposites had higher elongation-at-break over the neat PLA nanocomposites because of the plasticization effect of the FFL oil plasticizer. Among the various nanocomposites, due to the Efibre configuration systems, the neat PLA-HyPEP Efibre nanocomposites had the highest modulus, load-at-yield and tensile strength.

9) Generally, the hybrid Efibres reinforced nanocomposites had higher flexural properties compared to their unmixed Efibres counterparts. Among the various nanocomposites, the neat PLA-HyPEP Efibre nanocomposite had better flexural properties.

10) The impact strength of the neat PLA-Efibre and the mod PLA-Efibre nanocomposites were higher when compared to the UNPLA and UMPLA matrices. In addition, the impact strength of the mod PLA-Efibre nanocomposites is higher when compared to the neat PLA-Efibre nanocomposites. This is due to an increase in the toughness of the mod PLA-Efibre nanocomposites due to the plasticization effect, supported by the higher ductility observed from the tensile test. Overall, when composites with the various Efibre configurations were compared, the mod PLA-PET Efibre nanocomposite had the lowest impact strength.

The invention, as illustrated, provides a process for producing a nanocomposite of a brittle polymeric material, which can employ a bio-based, biodegradable, brittle polymeric material to provide a sheet or film nanocomposite of the brittle polymeric material which, inter alia, depending on composition, advantageously shows improved mechanical and thermal properties, such as improved impact resistance, stability, stiffness and strength compared to a neat, uncompounded sheet or film of the same brittle polymeric material. The resultant high-impact resistance sheet or film nanocomposite of the brittle polymeric material is suitable for use in the manufacture of watercraft, e.g., in the construction of the hull of a boat or a ship and can be biodegradable to a large extent. The invention, as illustrated, advantageously can substitute environmentally unfriendly fibreglass and other environmentally unfriendly reinforcing materials in nanocomposite materials, particularly biobased nanocomposite materials such as PLA, with recycled thermoplastics as reinforcing nanofibres.

## Claims

1. A process for producing a nanocomposite of a brittle polymeric material, the process including

   forming sheets or films from the brittle polymeric material compounded with a plasticizer; sandwiching a mat of nanofibres of at least one thermoplastic between two of the sheets or films to form a green nanocomposite structure, and

   subjecting the green nanocomposite structure to an elevated pressure and an elevated temperature to produce a sheet or film nanocomposite of the brittle polymeric material which shows improved impact resistance compared to a neat, uncompounded sheet or film of the same brittle polymeric material.

2. The process according to claim 1, wherein the brittle polymeric material is a biodegradable polymer or a biobased material, preferably being selected from the group consisting of polylactide (PLA), biodegradable polymers from renewable sources including polyhydroxy butyrate (PHB), poly(3-hydroxybutyrate-co-3-hydroxyhexanoate) (PHBH), poly(3-hydroxybutyrate-co-3-hydroxyvalerate) (PHBV) with brittle composition, petroleum source-derived biodegradable polymers including poly(butylene succinate-co-adipate) (PBSA) with brittle composition, and mixtures of two or more of these.

3. The process according to claim 1 or claim 2, wherein the brittle polymeric material is polylactide (PLA).

4. The process according to any one of claims 1 to 3, wherein the plasticizer is a biobased material, preferably being selected from the group consisting of a lanolin composition, preferably an epoxidized lanolin composition, epoxidized

palm oil, epoxidized canola oil, epoxidized soybean oil, and mixtures of two or more of these.

**5.** The process according to any one of claims 1 to 4, wherein the brittle polymeric material is compounded with the plasticizer in a mass ratio of between about 95:5 and about 97:3, e.g., about 96.5:3.5.

**6.** The process according to any one of claims 1 to 5, wherein the nanofibres are electrospun thermoplastic nanofibres, preferably electrospun thermoplastic nanofibres obtained from one or more recycled thermoplastics.

**7.** The process according to claim 6, wherein the thermoplastic is selected from the group consisting of expanded polystyrene (EPS), polyethene terephthalate (PET), polyvinylidene fluoride (PVDF), polylactide (PLA), and two or more of these.

**8.** The process according to any one of claims 1 to 7, wherein

the nanofibres include or consist of PET nanofibres and have an average fibre diameter of between about 100 nm and about 180 nm, e.g., about 139 nm; or
the nanofibres include or consist of EPS nanofibres and have an average fibre diameter of between about 370 nm and about 450 nm, e.g., about 413 nm.

**9.** The process according to any one of claims 1 to 8, wherein the mat is a non-woven mat.

**10.** The process according to any one of claims 1 to 9, wherein

the mat consists of a single ply or layer of nanofibres of a single thermoplastic; or
the mat consists of more than one ply or layer, each ply or layer consisting of one or more thermoplastics; or
the mat consists of more than one ply or layer, each ply or layer consisting of a single thermoplastic, and at least two of the plies or layers consist of a different thermoplastic than the other of said at least two plies or layers.

**11.** The process according to any one of claims 1 to 10, wherein the mat comprises

two plies or layers of EPS sandwiching a single ply or layer of PET; or
two plies or layers of PET sandwiching a single ply or layer of EPS.

**12.** The process according to any one of claims 1 to 11, wherein

the nanofibres include or consist of PET nanofibres and the mat, prior to subjecting the green nanocomposite structure to an elevated pressure and an elevated temperature, has a thickness of between about 0.1 mm and about 0.14 mm, e.g., about 0.12 mm; or
the nanofibres include or consist of EPS nanofibres and the mat, prior to subjecting the green nanocomposite structure to an elevated pressure and an elevated temperature, has a thickness of between about 0.15 mm and about 0.3 mm, e.g., about 0.25 mm.

**13.** The process according to any one of claims 1 to 12, wherein

the nanofibres include or consist of unmixed PET nanofibres and the mass ratio of two sheets or films of the brittle polymeric material and the layers of a mat of the nanofibres is between about 98.2:1.8 and about 99.0:1.0, e.g., about 98.6:1.4; or
the nanofibres include or consist of unmixed EPS nanofibres and the mass ratio of two sheets or films of the brittle polymeric material and the layers of a mat of the nanofibres is between about 96.5:3.5 and about 97.7:2.3, e.g., about 97.1:2.9.

**14.** The process according to any one of claims 1 to 13, wherein

the elevated pressure is at least about 900 kPa, preferably at least about 950 kPa, more preferably at least about 975 kPa, e.g., about 1000 kPa; and
the elevated temperature is at least about 180°C, preferably at least about 185°C, more preferably at least about 190°C, e.g., about 190°C.

**15.** The process according to any one of claims 1 to 14, wherein the nanocomposite has a thickness of between about 1 mm and about 3mm, or between about 1.5mm and about 2.5mm, or between about 1.75mm and about 2.25mm, e.g., about 2.0mm.

**16.** The process according to any one of claims 1 to 15, which includes annealing the sheet or film nanocomposite at a temperature of at least about 70°C, preferably at least about 75°C, more preferably at least about 80°C, e.g., about 80°C, for at least about 2 hours, preferably at least about 2.5 hours, more preferably at least about 3 hours, e.g., about 3 hours, under vacuum.

**17.** The process according to any one of claims 1 to 16, which includes subjecting the nanofibres to alkaline treatment, prior to sandwiching the nanofibres between sheets or films of the brittle polymeric material.

**18.** A nanocomposite of a brittle polymeric material produced by the process according to any one of claims 1 to 17.

**19.** A nanocomposite of a brittle polymeric material comprising sheets or films of the brittle polymeric material, compounded with a plasticizer, sandwiching a mat of nanofibres of at least one thermoplastic.

**20.** Use of a sheet or film nanocomposite of a brittle polymeric of claim 18 or claim 19 in the construction of a watercraft.

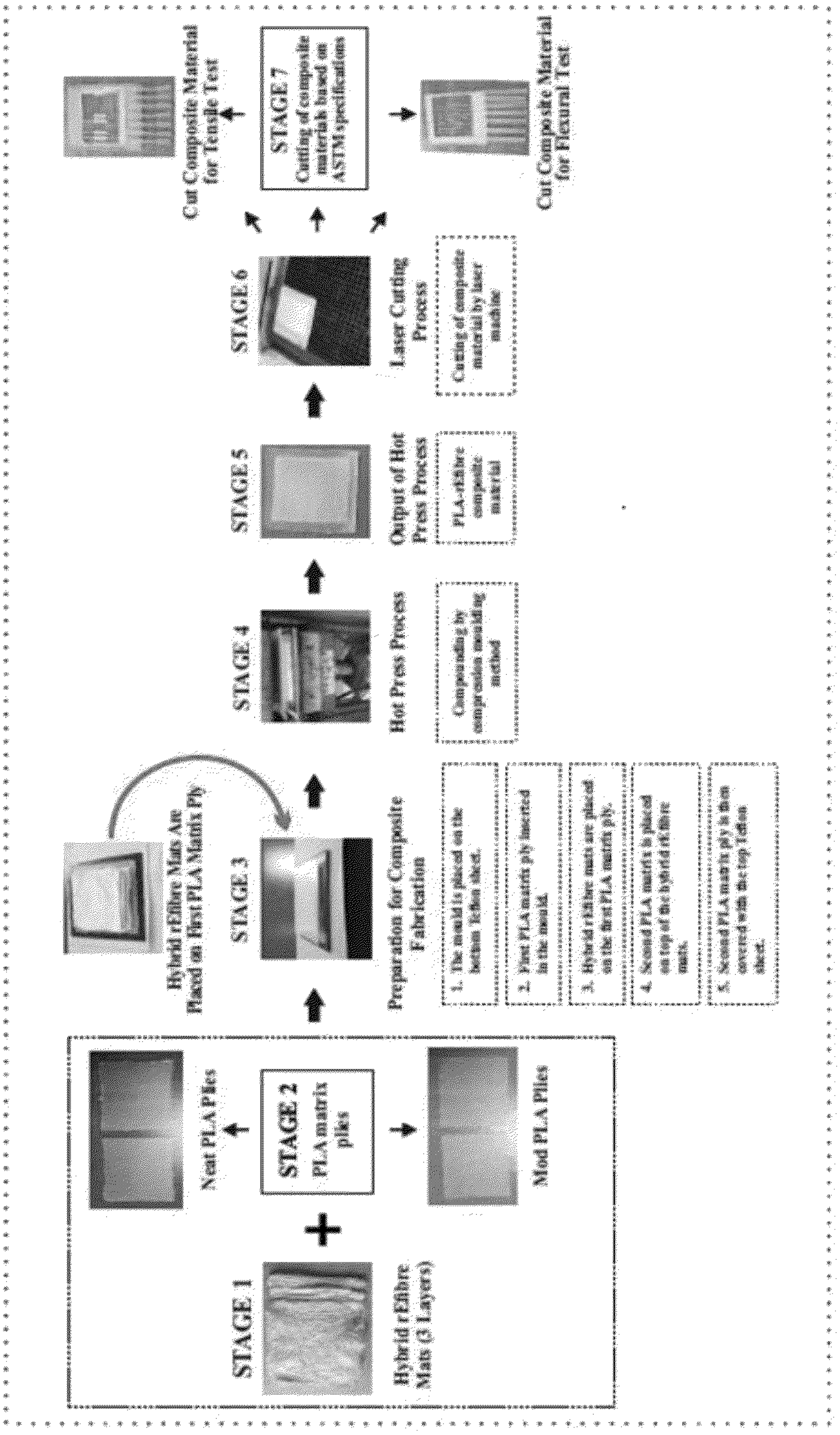
STAGE 1
Hybrid rEfibre Mats (3 Layers)
STAGE 2
PLA matrix plies
Neat PLA Plies
Mod PLA Plies
Hybrid rEfibre Mats Are Placed on First PLA Matrix Ply
STAGE 3
Preparation for Composite Fabrication
1. The mould is placed on the bottom Teflon sheet.
2. First PLA matrix ply inserted in the mould.
3. Hybrid rEfibre mats are placed on the first PLA matrix ply.
4. Second PLA matrix is placed on top of the hybrid rEfibre mats.
5. Second PLA matrix ply is then covered with the top Teflon sheet.
STAGE 4
Hot Press Process
Compounding by compression moulding method
STAGE 5
Output of Hot Press Process
PLA-rEfibre composite material
STAGE 6
Laser Cutting Process
Cutting of composite material by laser machine
STAGE 7
Cutting of composite materials based on ASTM specifications
Cut Composite Material for Tensile Test
Cut Composite Material for Flexural Test

Figure 1

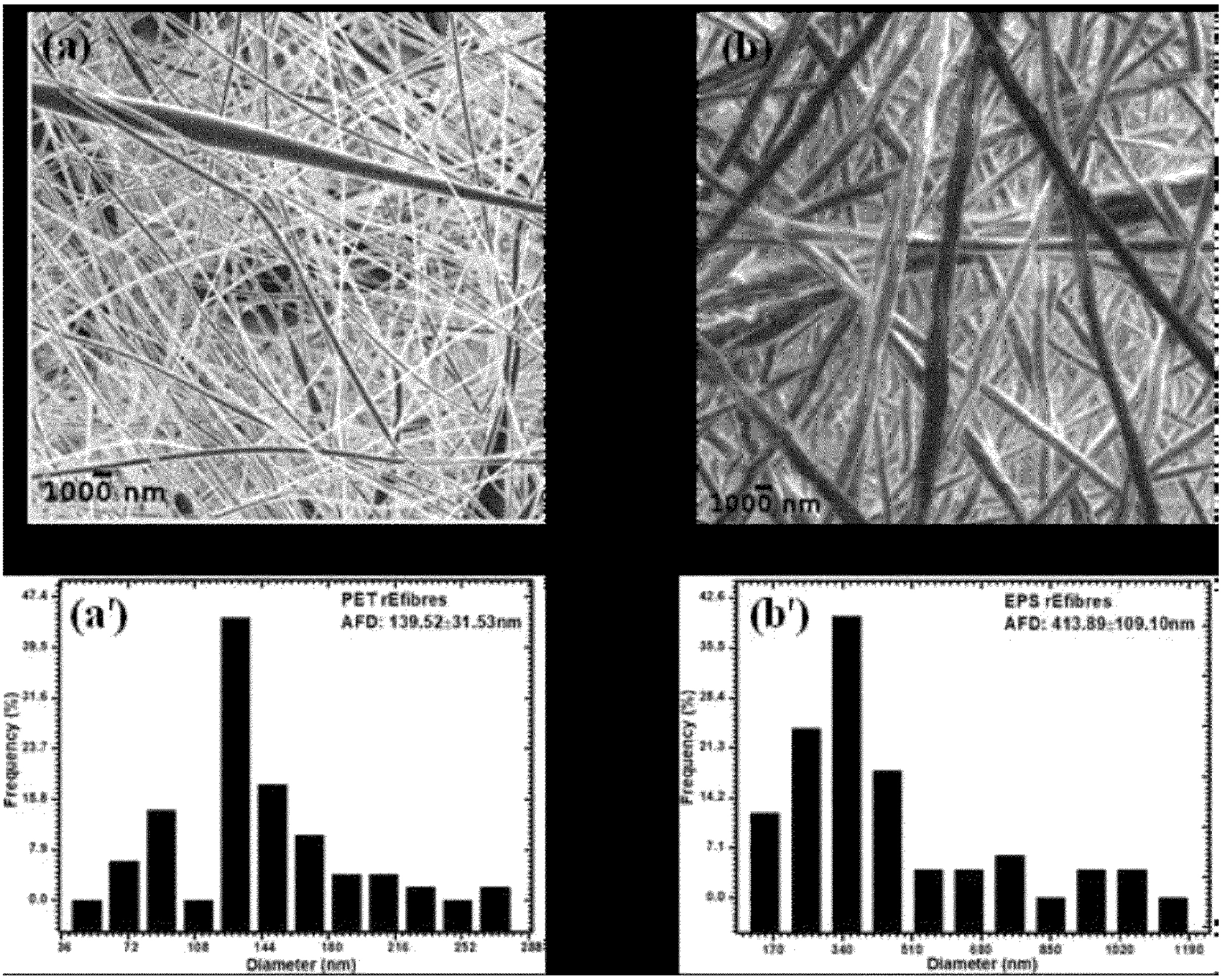
(a)
1000 nm
(b)
1000 nm
(a')
PET rEfibres
AFD: 139.52±31.53nm
Frequency (%)
Diameter (nm)
(b')
EPS rEfibres
AFD: 413.89±109.10nm
Frequency (%)
Diameter (nm)

Figure 2

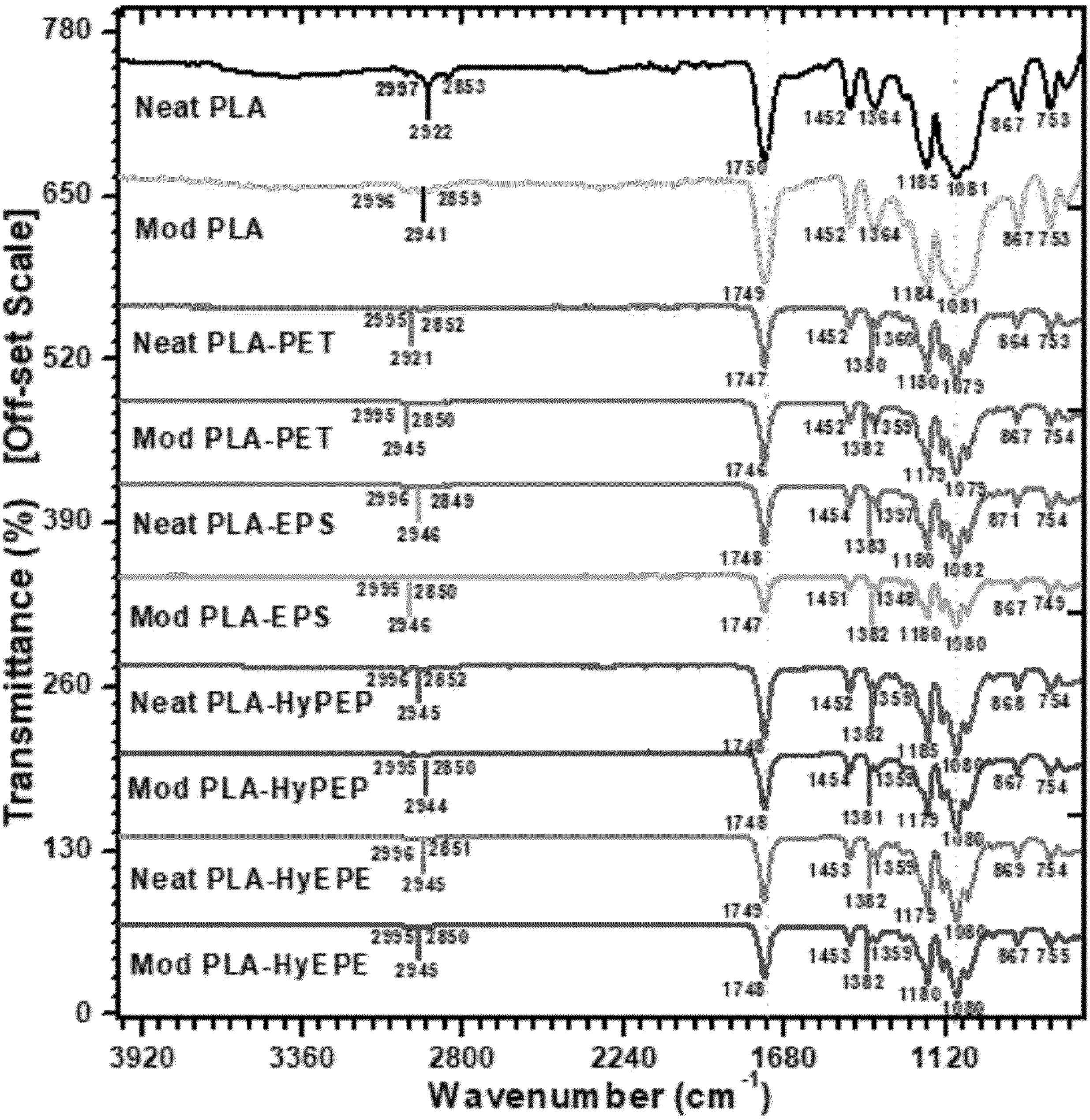
Transmittance (%) [Off-set Scale]
Wavenumber (cm-1)
Neat PLA
Mod PLA
Neat PLA-PET
Mod PLA-PET
Neat PLA-EPS
Mod PLA-EPS
Neat PLA-HyPEP
Mod PLA-HyPEP
Neat PLA-HyEPE
Mod PLA-HyEPE

Figure 3

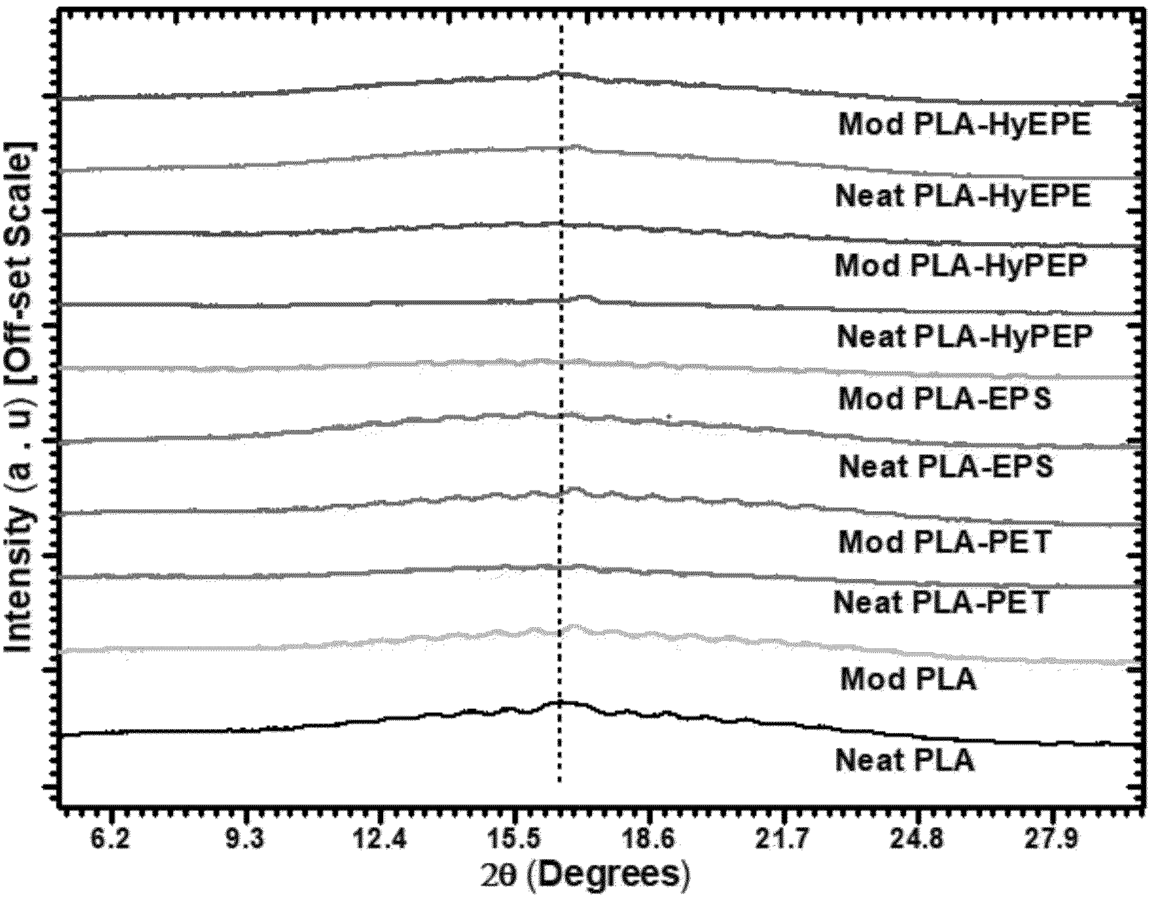


Figure 4

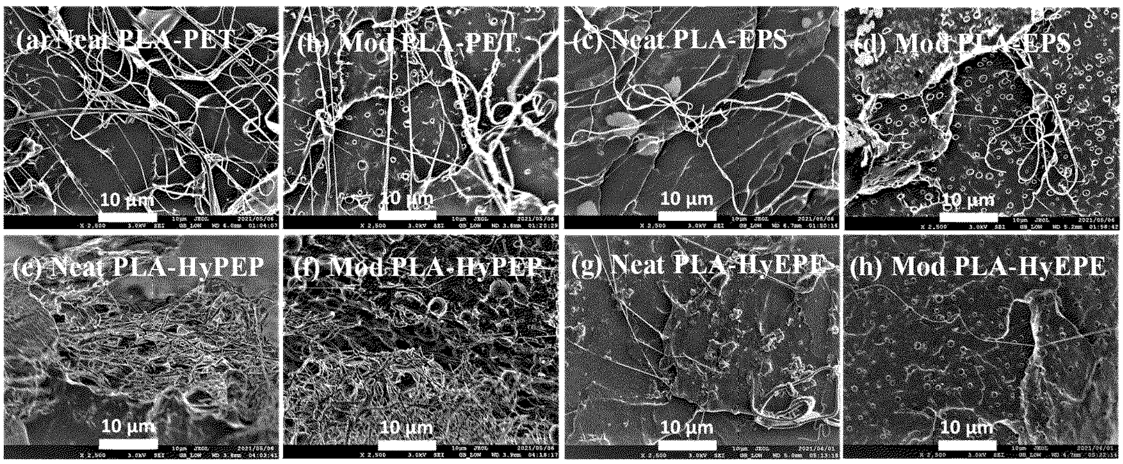


Figure 5

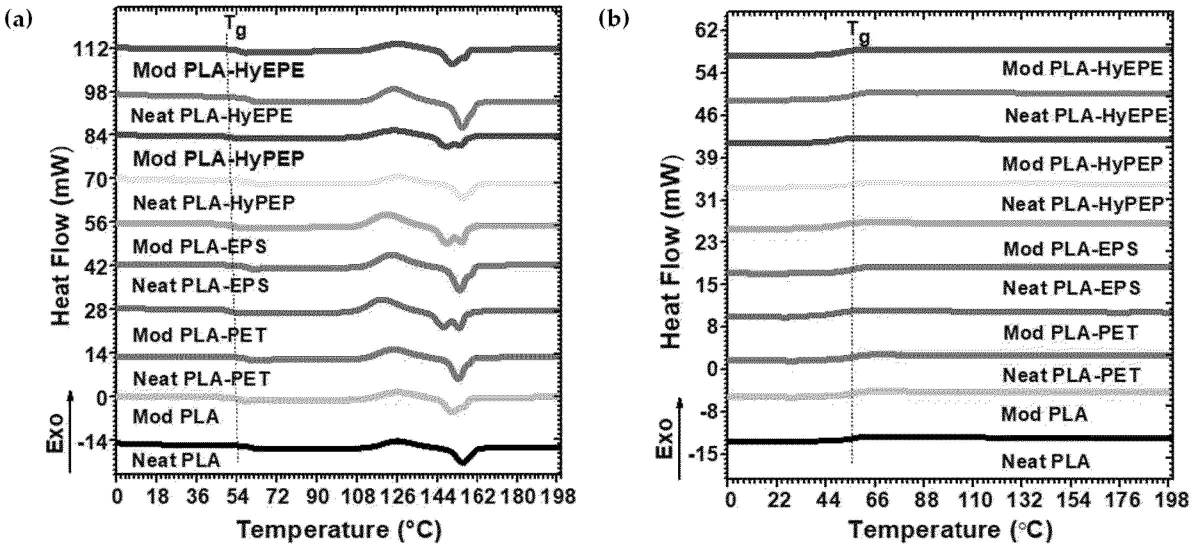
(a)
Tg
Mod PLA-HyEPE
Neat PLA-HyEPE
Mod PLA-HyPEP
Neat PLA-HyPEP
Mod PLA-EPS
Neat PLA-EPS
Mod PLA-PET
Neat PLA-PET
Mod PLA
Neat PLA
Heat Flow (mW)
Exo
Temperature (°C)
(b)
Tg
Mod PLA-HyEPE
Neat PLA-HyEPE
Mod PLA-HyPEP
Neat PLA-HyPEP
Mod PLA-EPS
Neat PLA-EPS
Mod PLA-PET
Neat PLA-PET
Mod PLA
Neat PLA
Heat Flow (mW)
Exo
Temperature (°C)

Figure 6

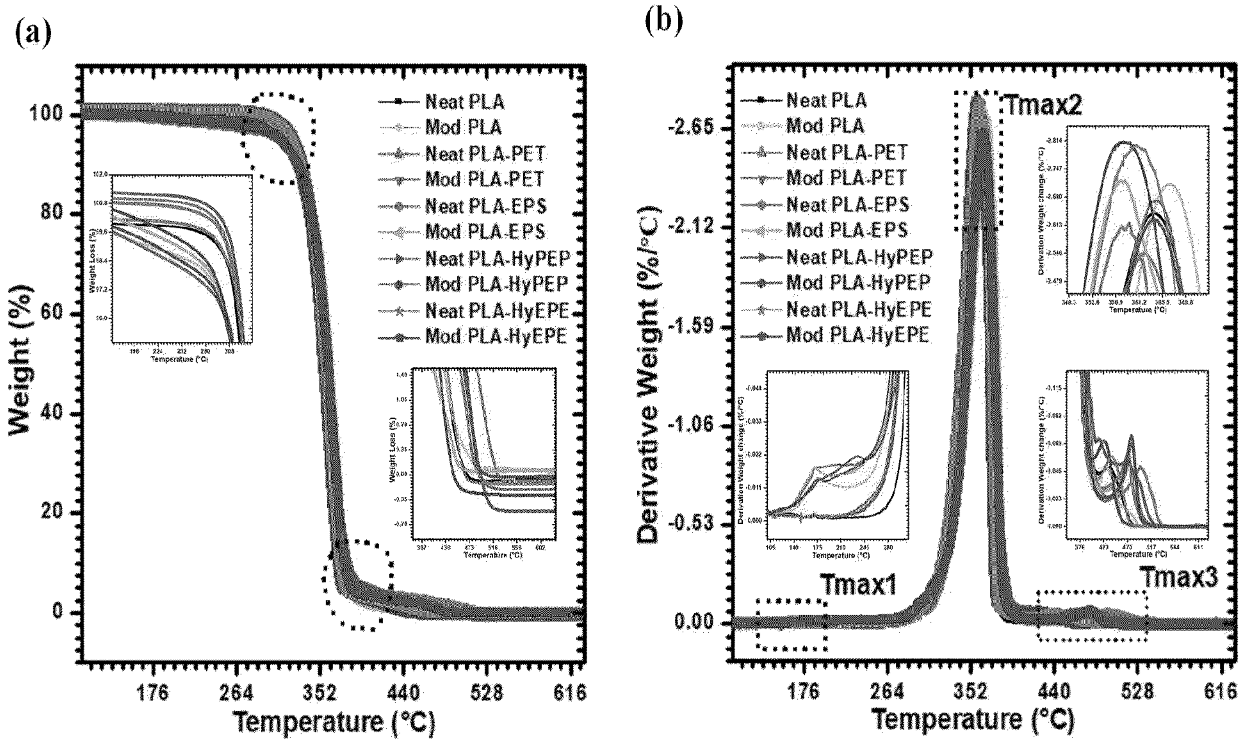
(a)
(b)
Neat PLA
Mod PLA
Neat PLA-PET
Mod PLA-PET
Neat PLA-EPS
Mod PLA-EPS
Neat PLA-HyPEP
Mod PLA-HyPEP
Neat PLA-HyEPE
Mod PLA-HyEPE
Weight (%)
Temperature (°C)
Derivative Weight (%/°C)
Tmax1
Tmax2
Tmax3

Figure 7

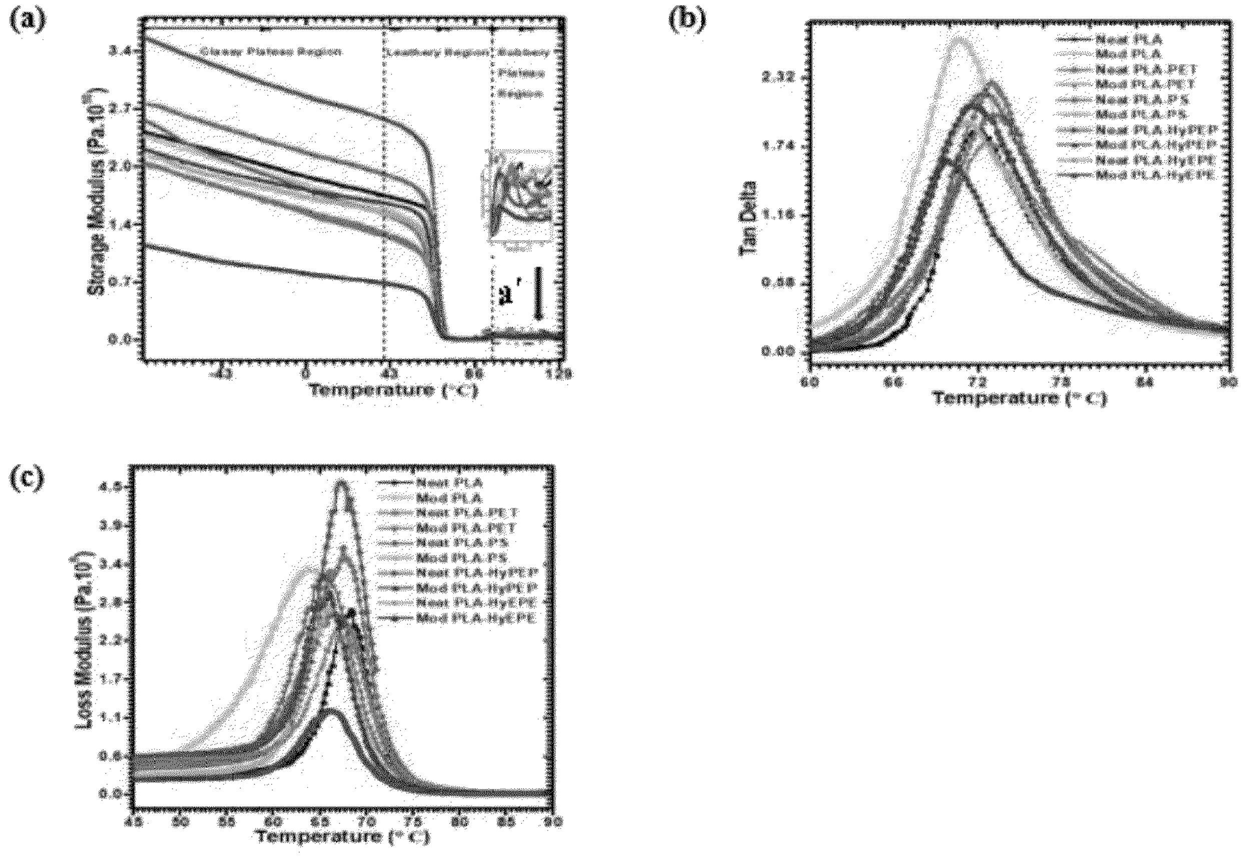
(a)
Storage Modulus
Temperature (°C)
(b)
Tan Delta
Temperature (°C)
Neat PLA
Mod PLA
Neat PLA-PET
Mod PLA-PET
Neat PLA-PS
Mod PLA-PS
Neat PLA-HyPEP
Mod PLA-HyPEP
Neat PLA-HyEPE
Mod PLA-HyEPE
(c)
Loss Modulus
Temperature (°C)
Neat PLA
Mod PLA
Neat PLA-PET
Mod PLA-PET
Neat PLA-PS
Mod PLA-PS
Neat PLA-HyPEP
Mod PLA-HyPEP
Neat PLA-HyEPE
Mod PLA-HyEPE

Figure 8

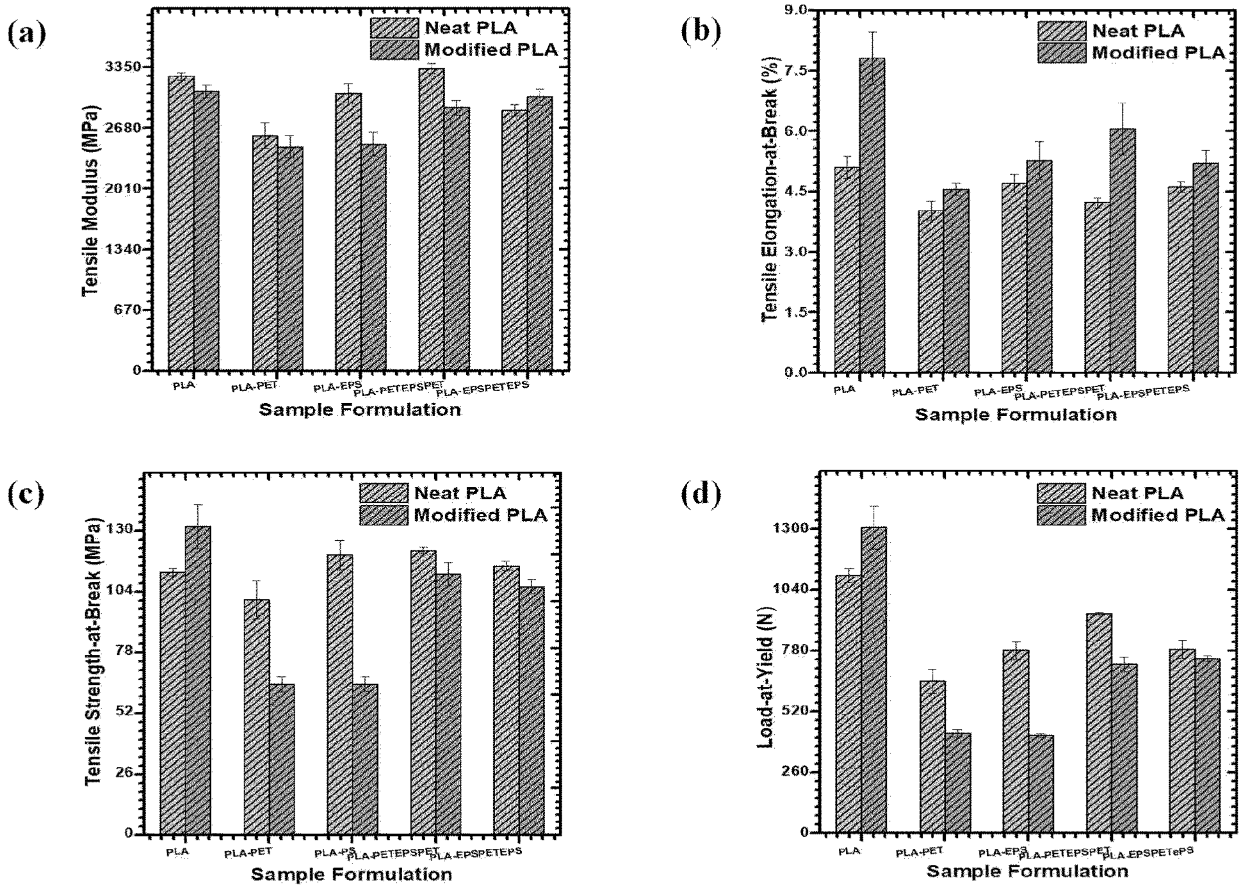
(a)
Neat PLA
Modified PLA
Tensile Modulus (MPa)
Sample Formulation
(b)
Neat PLA
Modified PLA
Tensile Elongation-at-Break (%)
Sample Formulation
(c)
Neat PLA
Modified PLA
Tensile Strength-at-Break (MPa)
Sample Formulation
(d)
Neat PLA
Modified PLA
Load-at-Yield (N)
Sample Formulation

Figure 9

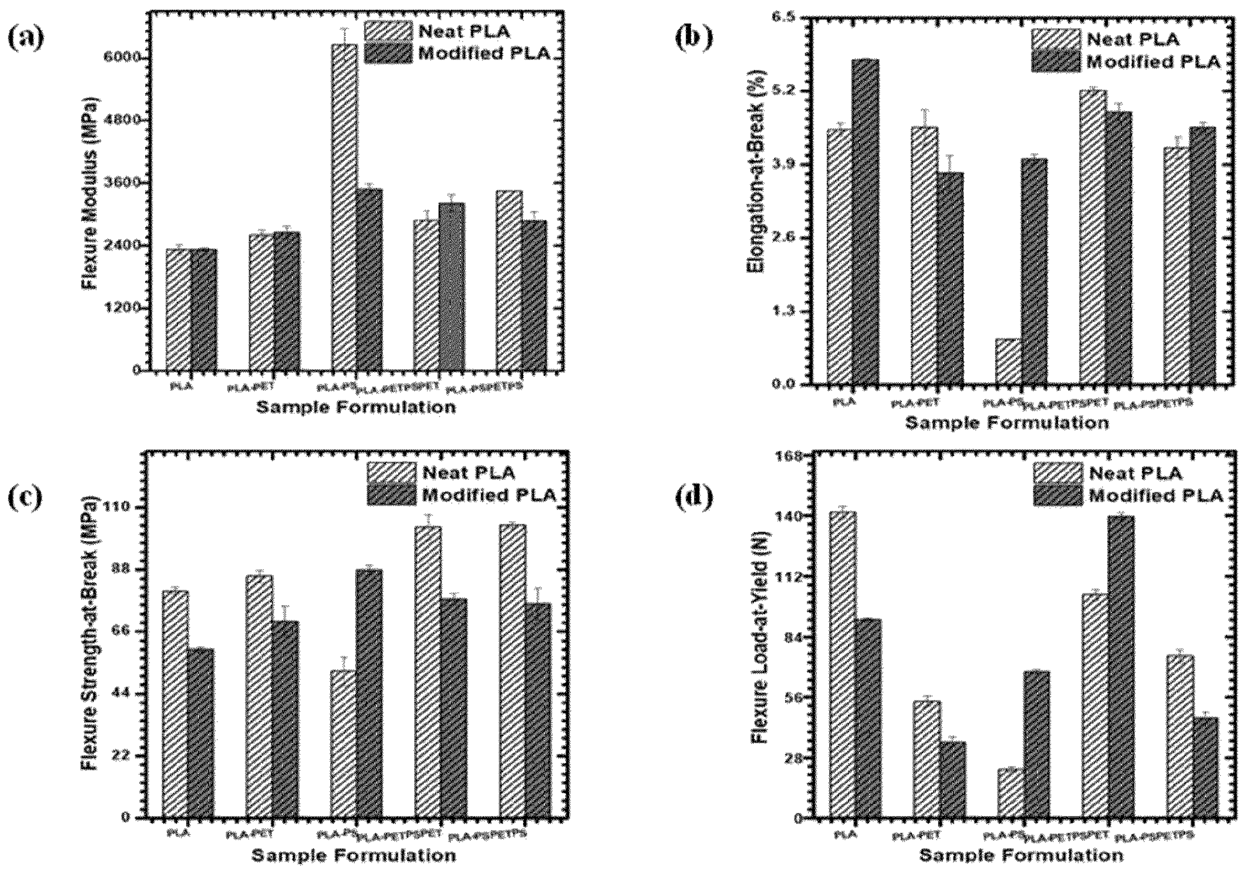
(a)
Neat PLA
Modified PLA
Flexure Modulus (MPa)
Sample Formulation
(b)
Elongation-at-Break (%)
(c)
Flexure Strength-at-Break (MPa)
(d)
Flexure Load-at-Yield (N)

Figure 10

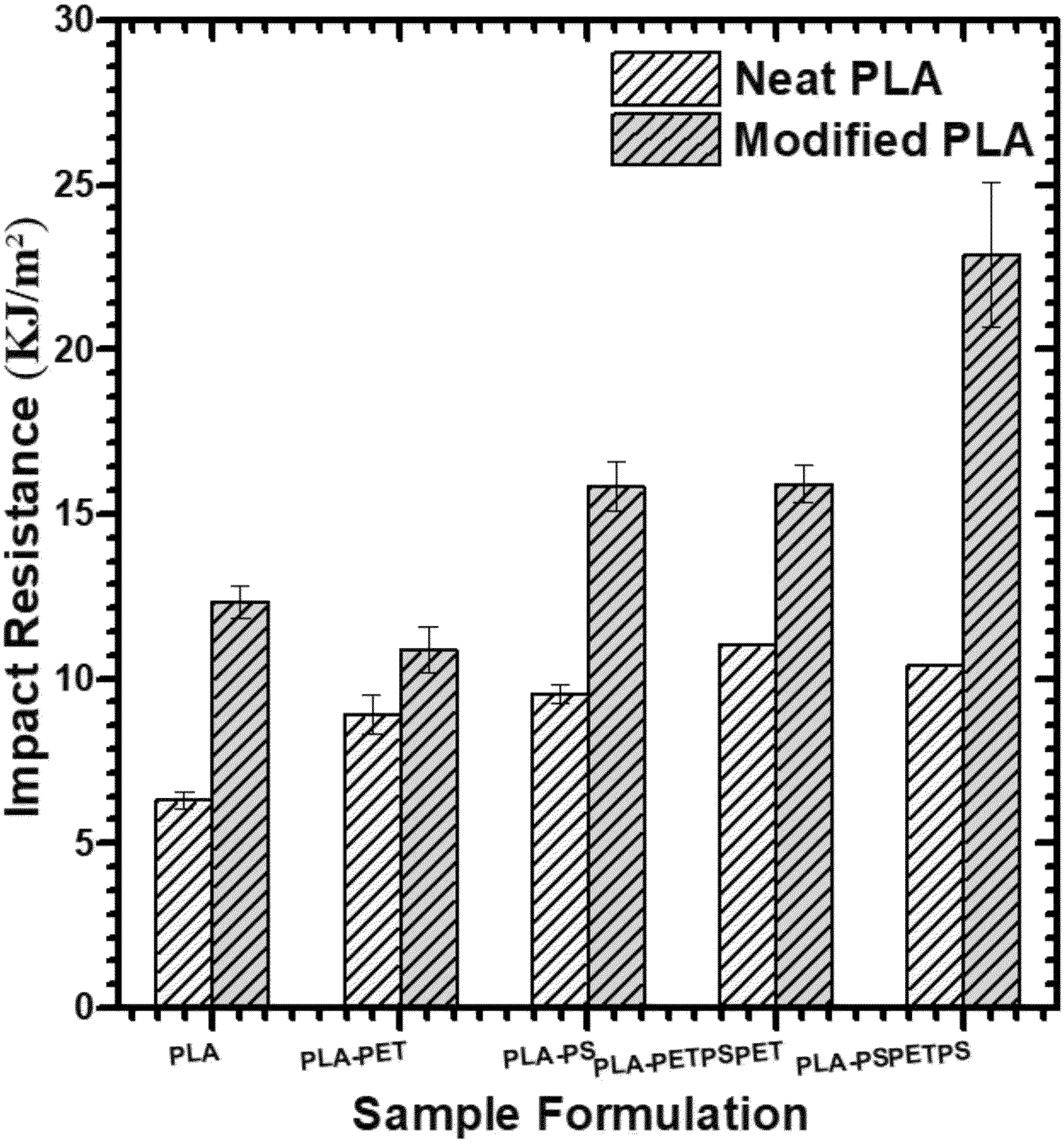
Neat PLA
Modified PLA
Impact Resistance (KJ/m2)
30
25
20
15
10
5
0
PLA
PLA-PET
PLA-PS
PLA-PETPSPET
PLA-PSPETPS
Sample Formulation

Figure 11

European Patent Office

# EUROPEAN SEARCH REPORT

Application Number
EP 24 20 4347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARÍA JOSÉ FABRA ET AL: "Nanostructured interlayers of zein to improve the barrier properties of high barrier polyhydroxyalkanoates and other polyesters", JOURNAL OF FOOD ENGINEERING, vol. 127, 2 December 2013 (2013-12-02), pages 1-9, XP055682203, AMSTERDAM, NL ISSN: 0260-8774, DOI: 10.1016/j.jfoodeng.2013.11.022 | 1-6,9, 10,14, 18,19 | INV. C08J5/00 B29C43/00 B82Y30/00 C08J5/18 C08K5/00 C08L67/04 C08L91/00 D04H1/4382 D04H1/728 |
| A | * sections: 2.2 "Preparation of films"; 2.2.1 "Preparation of electrospun zein Interlayers"; 2.2.2 "Preparation of electrospun zein interlayers through electrospinning"; 2.2.3 "Multilayer assembly" * ----- | 7,8, 11-13, 15-17,20 | |
| A | SESSINI VALENTINA ET AL: "Sandwich-Type Composites Based on Smart Ionomeric Polymer and Electrospun Microfibers", FRONTIERS IN MATERIALS, vol. 6, 3 December 2019 (2019-12-03), XP093245547, ISSN: 2296-8016, DOI: 10.3389/fmats.2019.00301 * the whole document * ----- | 1-20 | |

| TECHNICAL FIELDS SEARCHED (IPC) |
|---|
| C08J |
| B82Y |
| B29C |
| D04H |
| C08K |
| C09J |
| C08L |

The present search report has been drawn up for all claims

2

| Place of search | Date of completion of the search | Examiner |
|---|---|---|
| Munich | 3 February 2025 | Fischer, Viktor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- ZA 202309231


### Non-patent literature cited in the description


- **B. CHIENG** ; **N. IBRAHIM** ; **W. YUNUS** ; **M. HUSSEIN**. Poly(lactic acid)/Poly(ethylene glycol) Polymer Nanocomposites: Effects of Graphene Nanoplatelets. *Polymers (Basel).*, December 2013, vol. 6 (1), 93-104
- **E. BODROS** ; **I. PILLIN** ; **N. MONTRELAY** ; **C. BALEY**. Could biopolymers reinforced by randomly scattered flax fibre be used in structural applications?. *Compos. Sci. Technol.*, March 2007, vol. 67 (3-4), 462-470
- **R. NEPPALLI et al.** Electrospun nylon fibres for the improvement of mechanical properties and for the control of degradation behaviour of poly(lactide)-based composites. *J. Mater. Res.*, May 2012, vol. 27 (10), 1399-1409
- **A. RUBIO-LÓPEZ** ; **A. OLMEDO** ; **A. DÍAZ-ÁLVAREZ** ; **C. SANTIUSTE**. Manufacture of compression moulded PLA based biocomposites: A parametric study. *Compos. Struct.*, November 2015, vol. 131, 995-1000